**Europäisches Patentamt**

(19) **European Patent Office**

**Office européen des brevets**

(11) Publication number: **0 052 456**
**A1**

(12) **EUROPEAN PATENT APPLICATION**

(21) Application number: **81305164.6**

(22) Date of filing: **30.10.81**

(51) Int. Cl.³: **G 06 F 3/04**
**H 04 L 11/16**

(30) Priority: **10.11.80 US 205809**

(43) Date of publication of application:
**26.05.82 Bulletin 82/21**

(84) Designated Contracting States:
**DE FR GB IT**

(71) Applicant: **XEROX CORPORATION**
**Xerox Square - 020**
**Rochester New York 14644(US)**

(72) Inventor: **Nelson, Frank McDonald**
**14547 Valley Vista Boulevard**
**Sherman Oaks California(US)**

(72) Inventor: **Mager, George Edward**
**1841 Harper Avenue**
**Hermosa Beach California(US)**

(72) Inventor: **Okazaki, James**
**4525 Ironwood Avenue**
**Seal Beach California(US)**

(72) Inventor: **Lee, William Wei-Tsung**
**20402 Graystone Lane**
**Huntington Beach California(US)**

(74) Representative: **Weatherald, Keith Baynes et al,**
**European Patent Attorney Rank Xerox Patent**
**Department 338 Euston Road**
**London NW1 3BH(GB)**

(54) **A shared-line communication system, and components therefor.**

(57) A communication system having multiple distributed control elements that operatively intercommunicate through packets of digital data over a shared line for directing control of a machine process. Each control element is adapted to abort the attempted transmission of data for a period of random duration upon detection of another element attempting to do the same; to cause all other elements to be inhibited while both the respective elements are self-inhibited, and to double its abortion period if interference is still detected when its first period ends.

FIG. 1

Croydon Printing Company Ltd.

- 1 -

A shared-line communication system, and components therefor

This invention relates to a communication system in the form of a data-transmission line shared by a plurality of data-using machines, such as computers, copiers, printers, word processors, etc.. Such networks are frequently controlled by a central microprocessor programmed in accordance with the specific network. One problem arising from this is that each machine is often of modular construction, necessitating replacement or modification of the program each time a module is added or subtracted.

This invention aims at overcoming this problem by distributing the processor functions, so that each module has its own processor. This avoids the need for reprogramming. Each such processor has a transmitter and receiver (transceiver) for communicating with other processors via the shared line, and an input/output (1/0) channel for communicating with its own module.

When two such processors attempt simultaneously to capture the empty line in order to transmit a block of data addressed to at least one other processor, the resulting 'collision' is detected by both processors. They thereupon cease attempting to capture the line (back-off) and wait for independent periods of random length. This ensures that one processor will have a very high probability of capturing the line without a collision, causing the other processor to wait until it has detected that the line has become free.

The present invention will now be described by way of example with reference to the accompanying drawings, in which:-

Figure 1 is a block diagram of a shared communication controller (SCC) of the invention;

Figure 2 is a similar diagram showing the interconnections between the SCC of Figure 1 and a typical processor chip in a system having distributed processing;

Figure 3 shows the connections to a bus processor portion of the SCC;

Figures 4 and 5 are diagrams expanding the distribution of data on lines 140-1 and 140-2 of figure 3;

0052456

- 2 -

Figure 6 is a block diagram showing interrupt signal lines;

Figures 7, 8 and 9 show the format of input/output channel (IOC) signals;

Figure 10 illustrates the relationship of the IOC registers to the channel control block (CCB) in main memory;

Figure 11 is a table of interrupt priorities;

Figure 12 shows the state of the SCC in three modes;

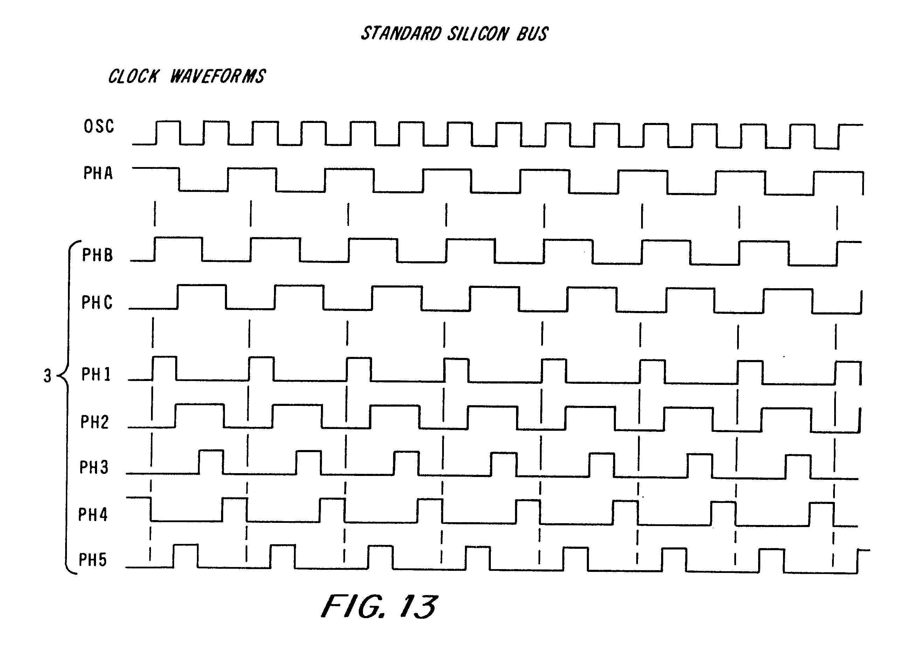

Figure 13 is a timing diagram of clock waveforms used in the processor;

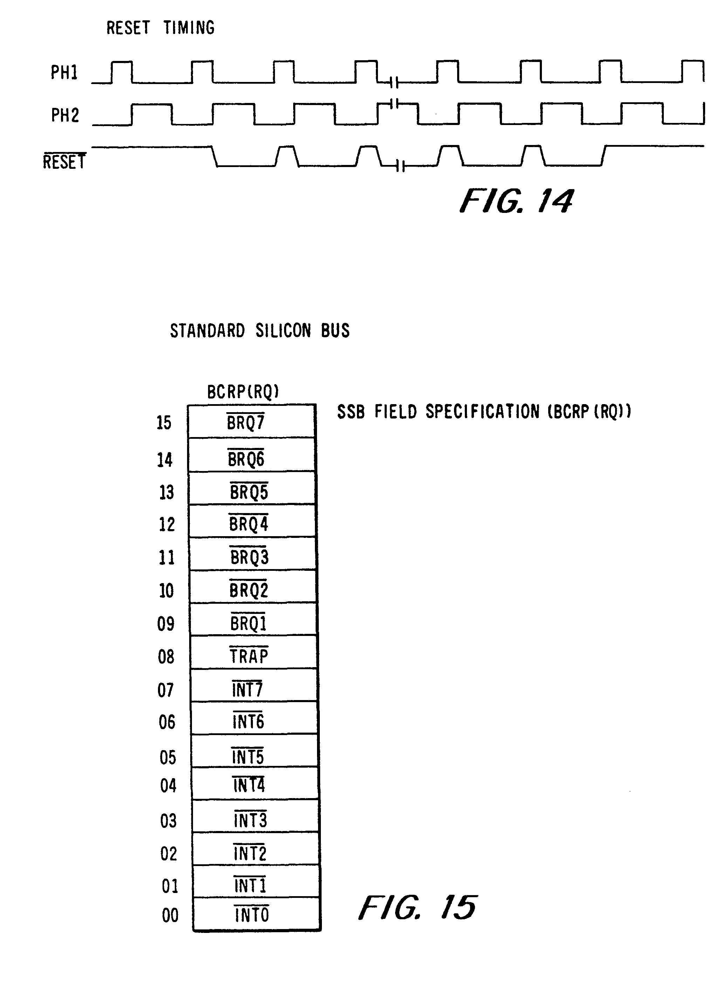

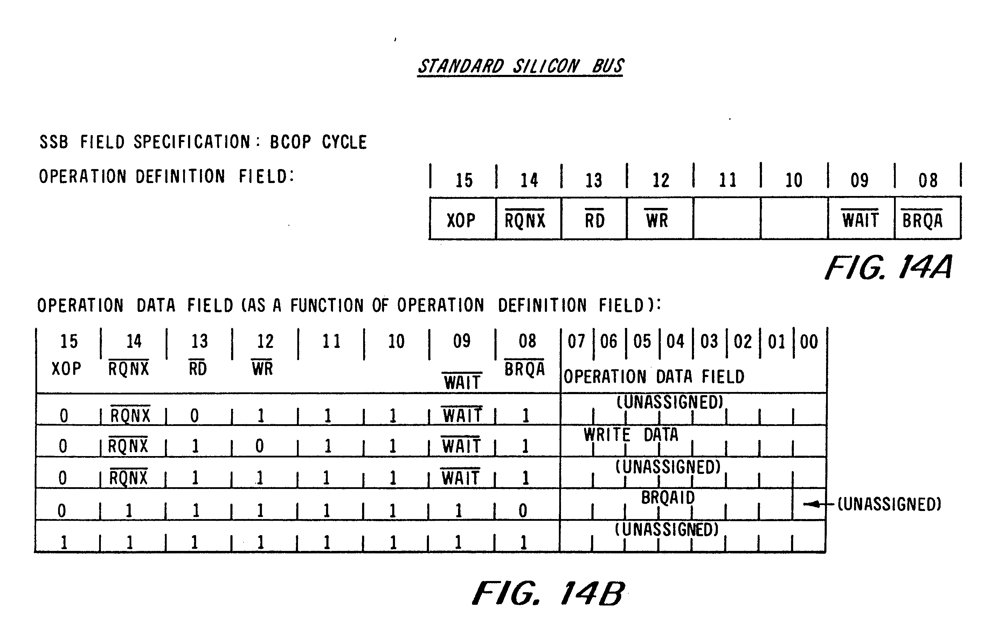

Figure 14 is a reset timing diagram;

Figures 14a and 14b are the field specification and data field format for the standard silicon bus;

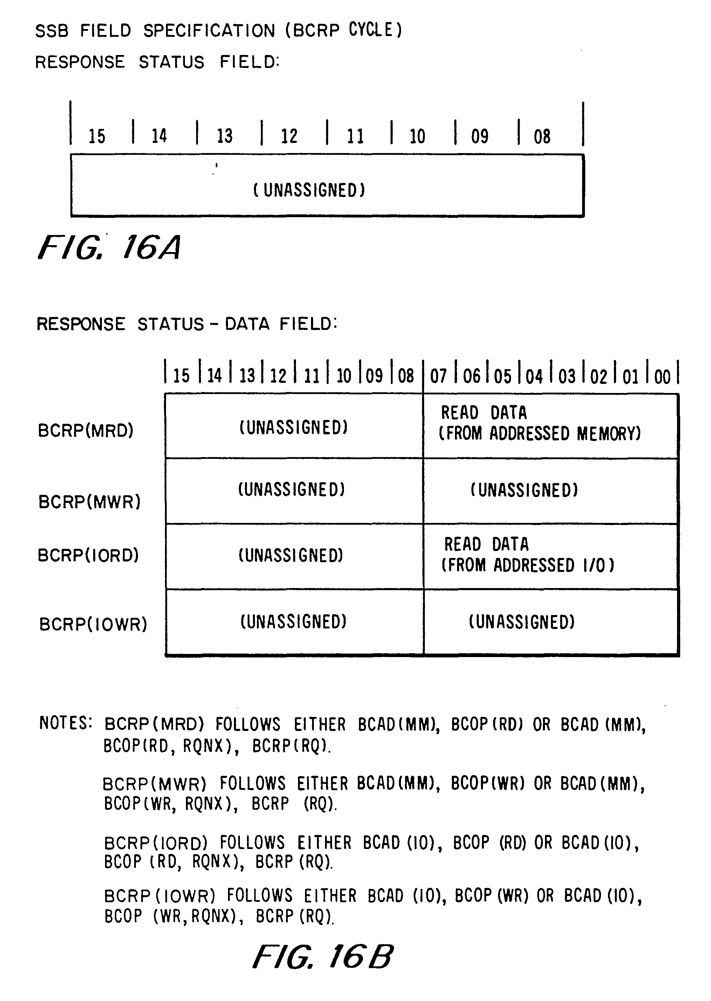

Figure 15 is the standard silicon bus (SSB) field specification;

Figures 16a and 16b show the SSB response data field formats;

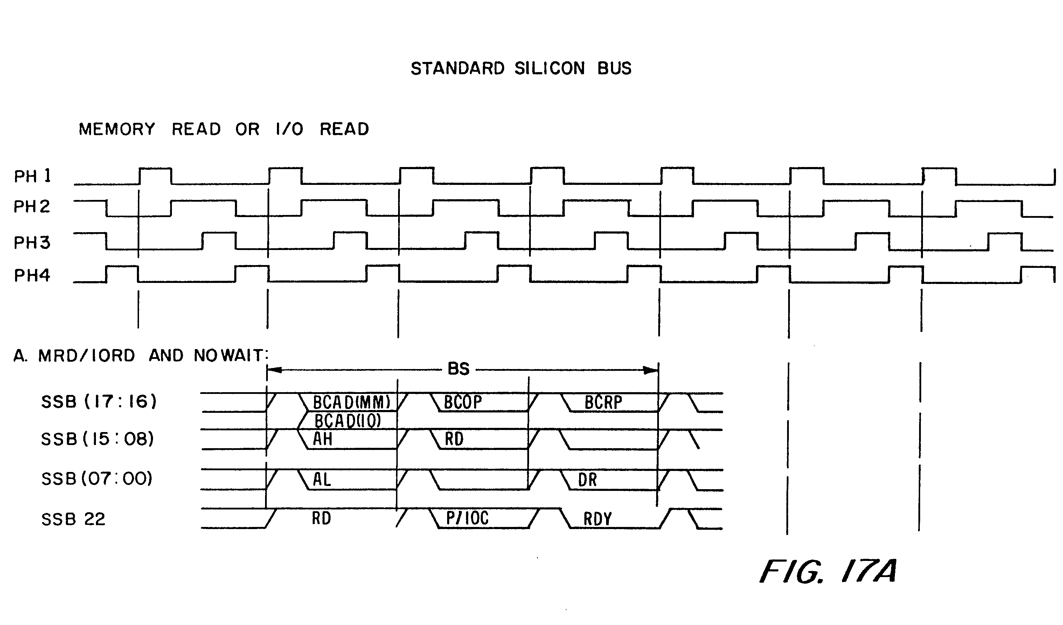

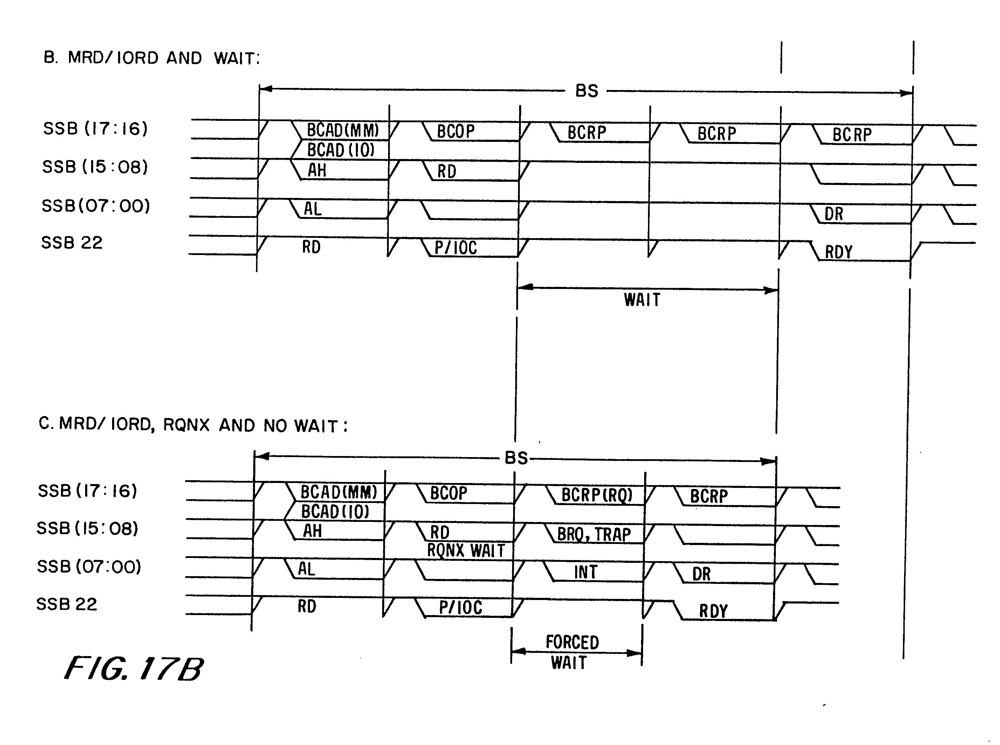

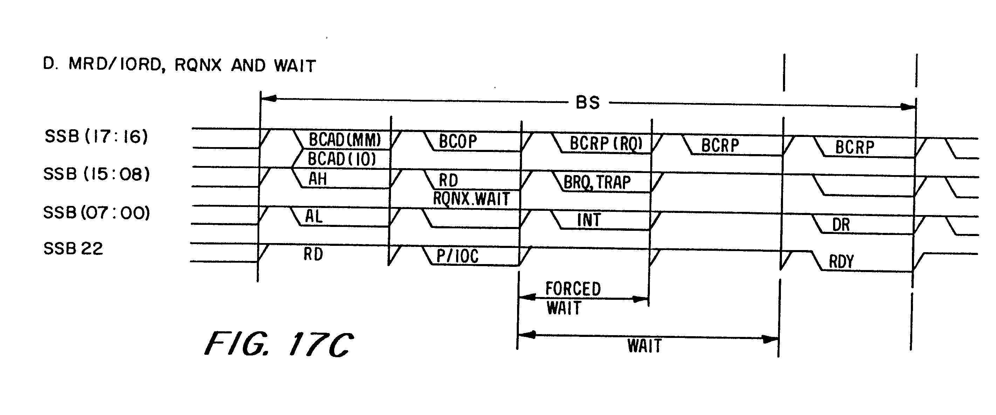

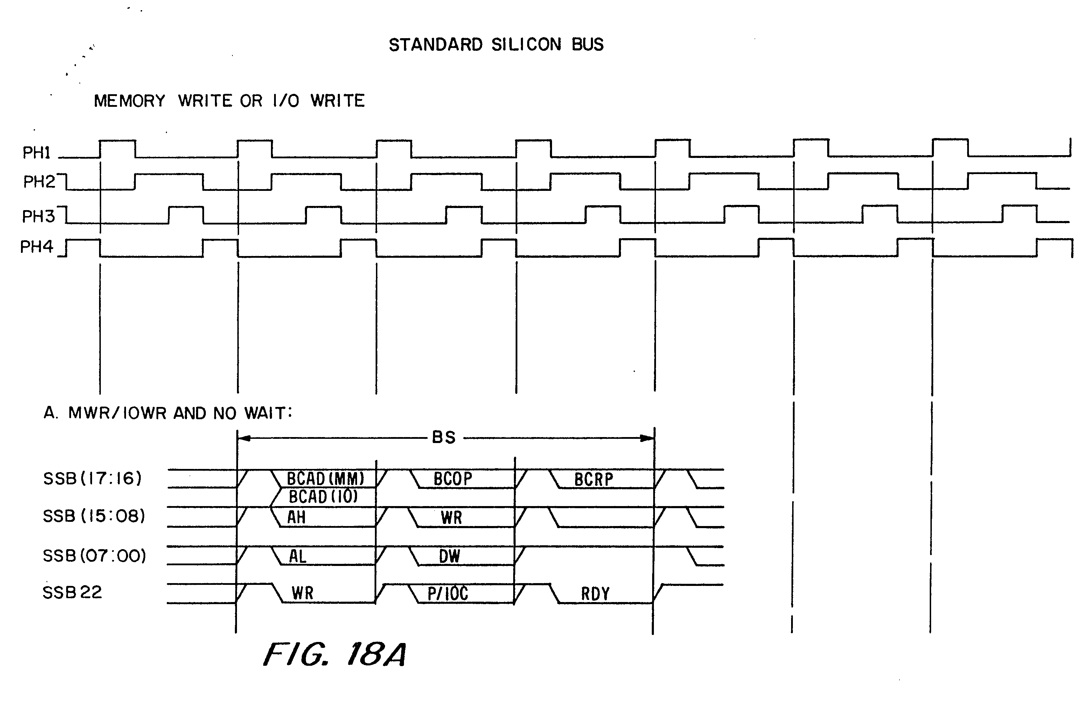

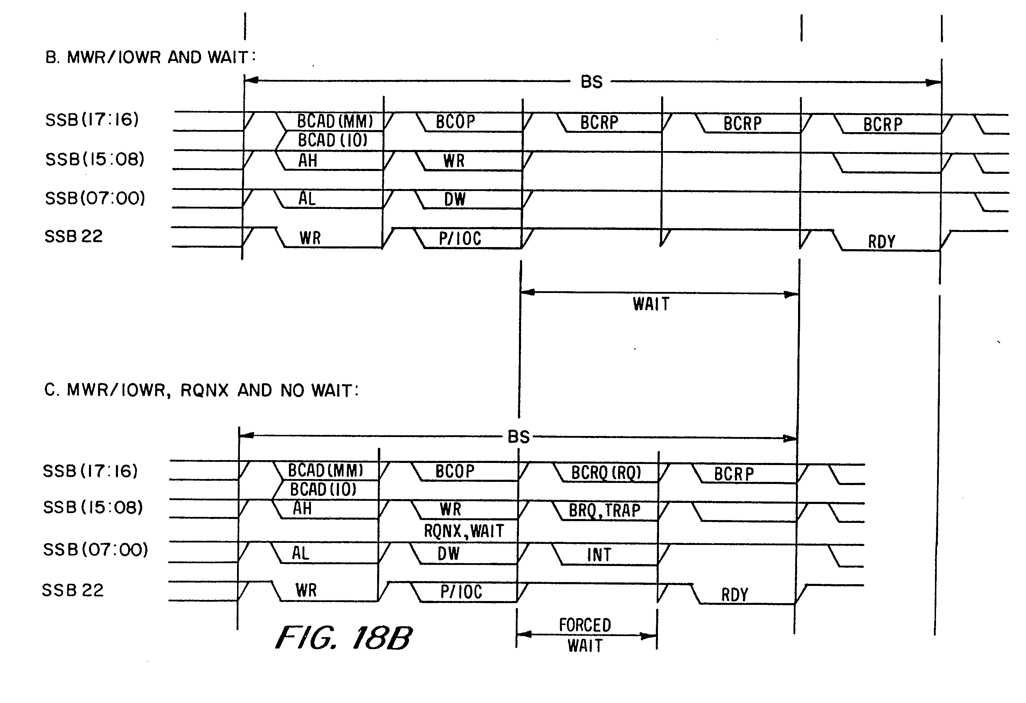

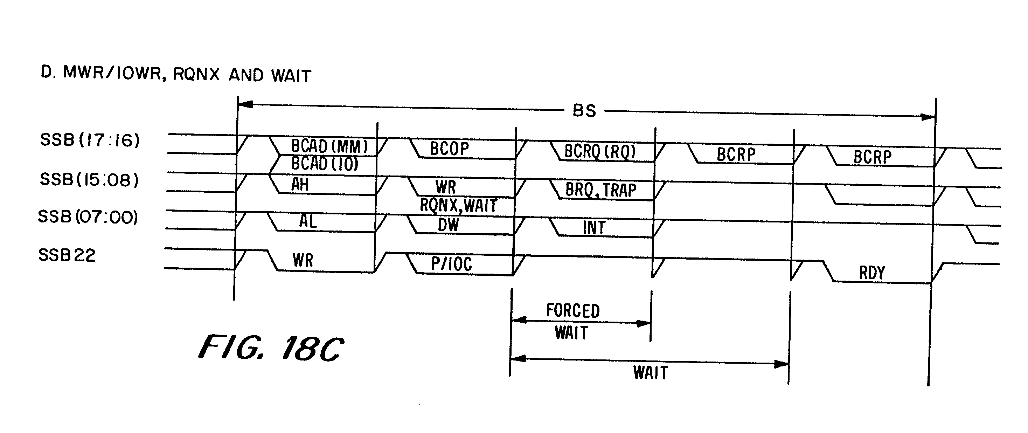

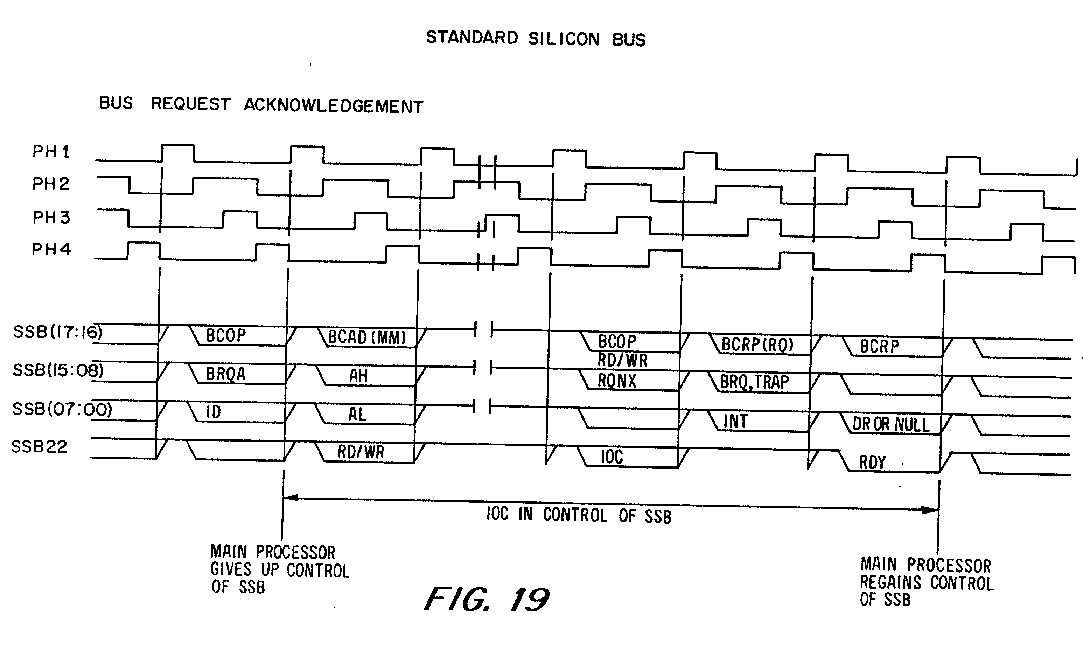

Figures 17a, 17b, 17c, 18a, 18b, 18c and 19 are timing diagrams for the SSB;

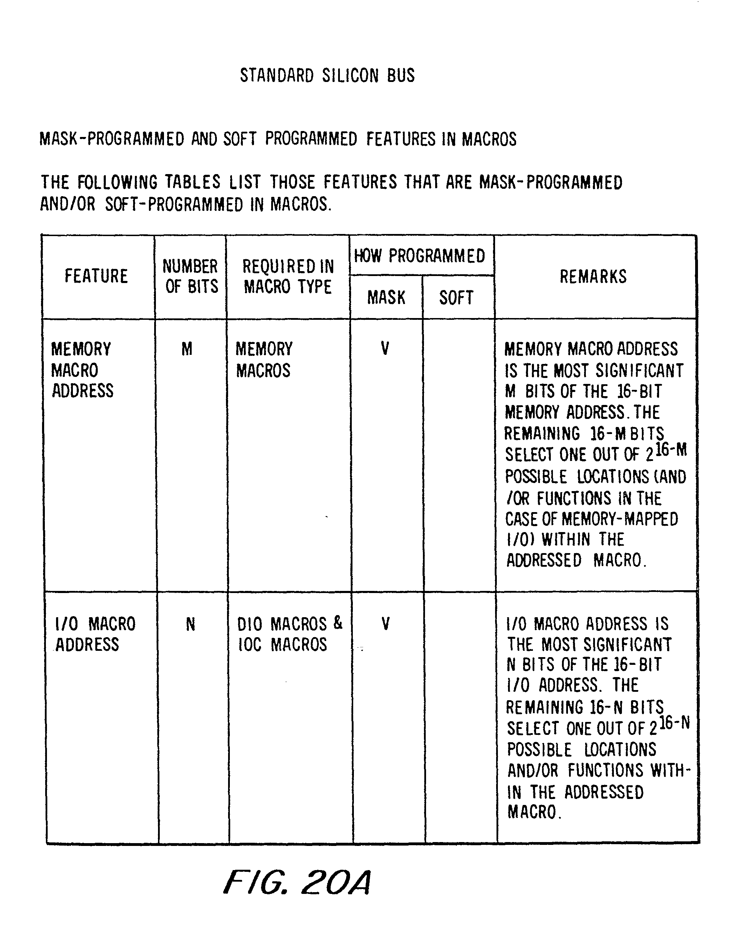

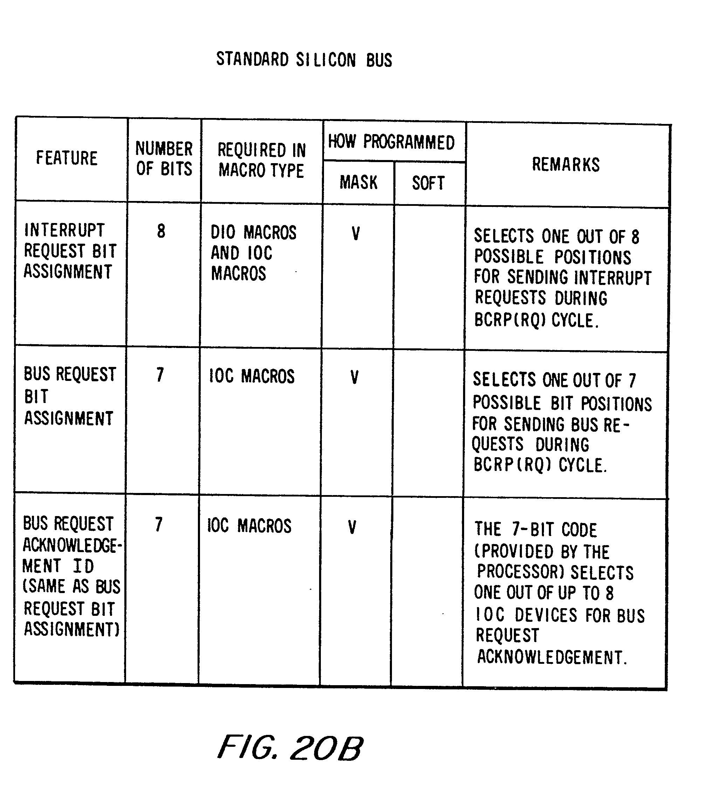

Figures 20a and 20b are a list of SSB features;

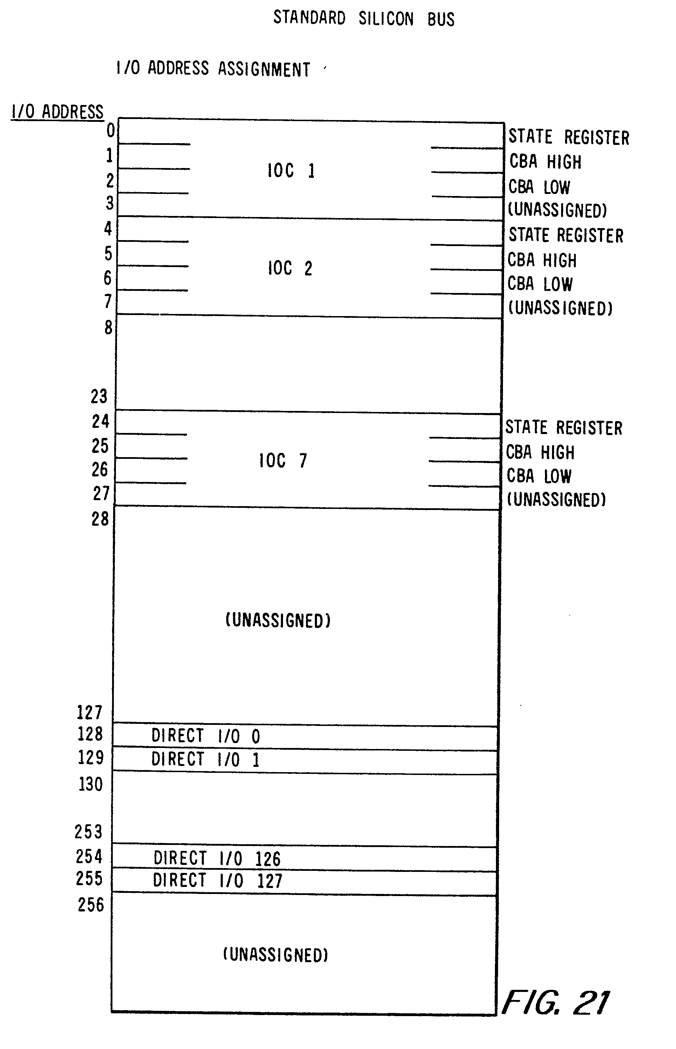

Figure 21 is a table of I/O address assignments;

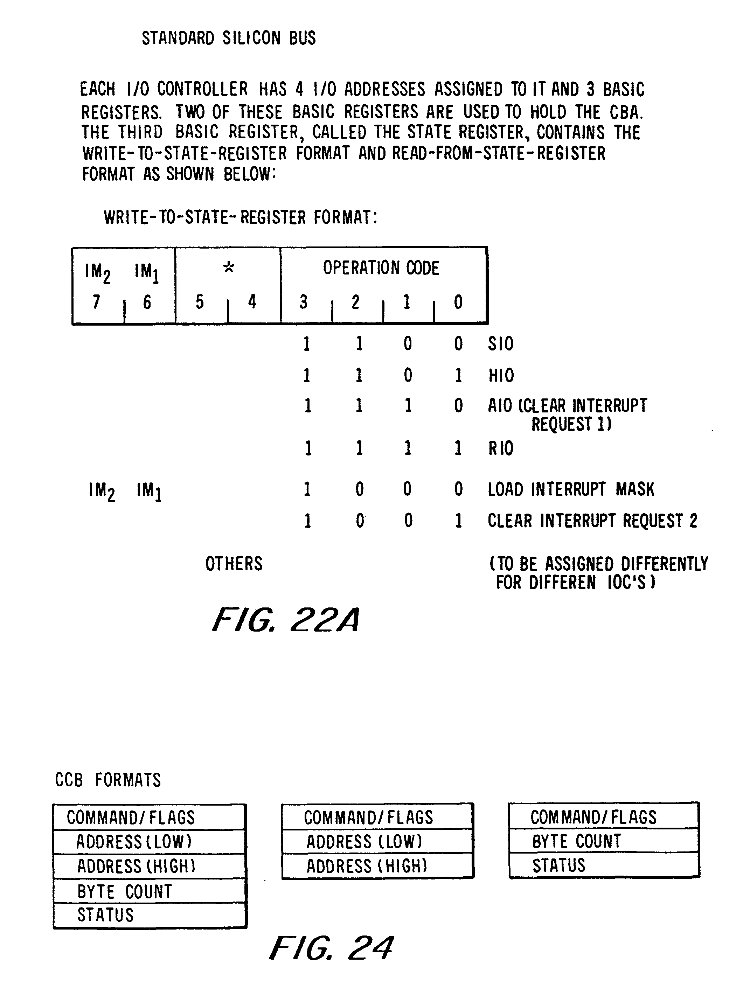

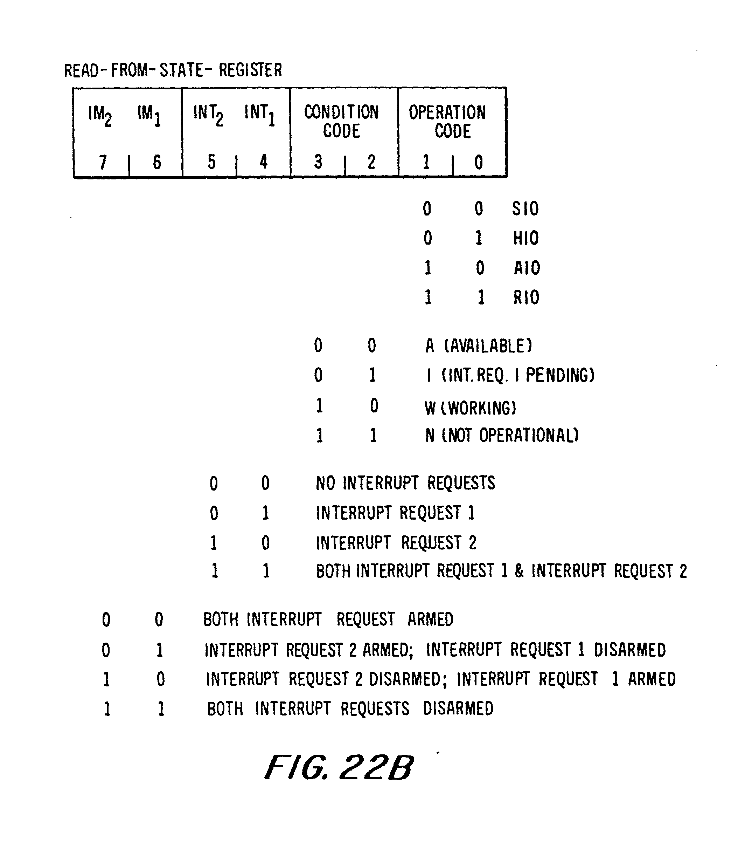

Figures 22a and 22b are SSB register formats;

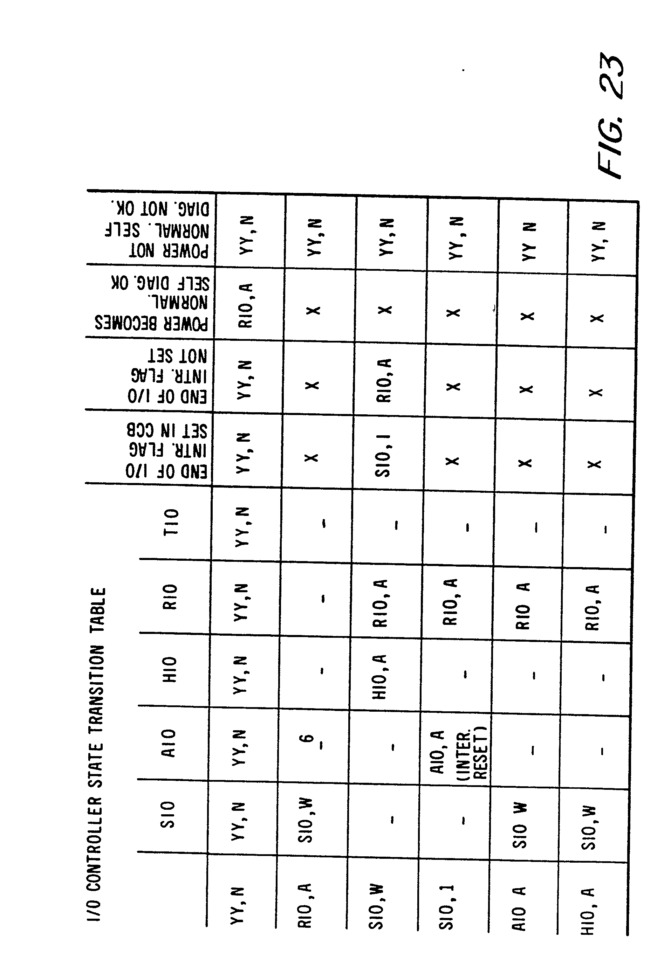

Figure 23 is an I/O controller state transition table;

Figure 24 is a list of CCB formats, and

Figure 25 is a block diagram of the back-off logic.

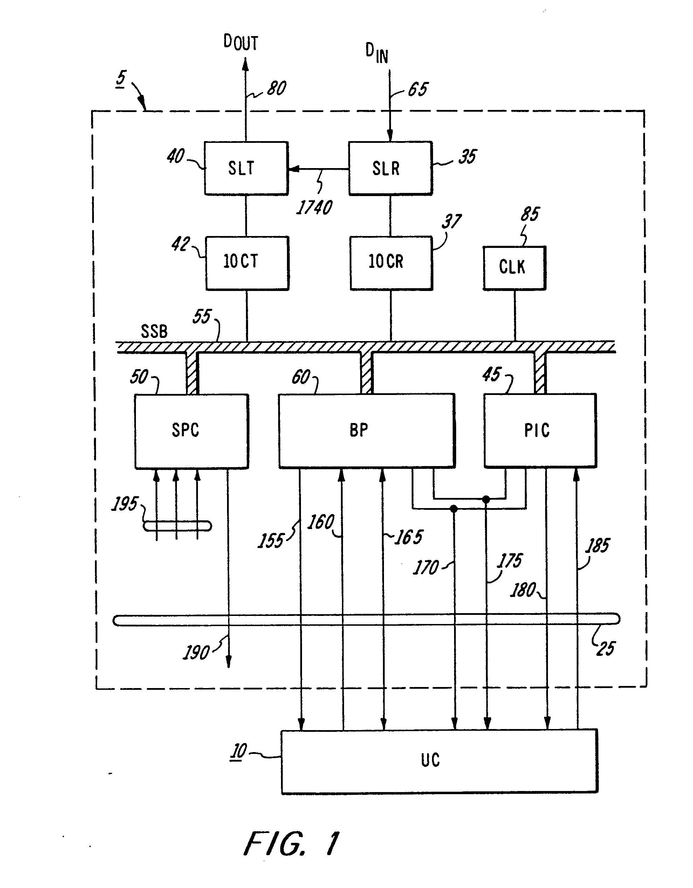

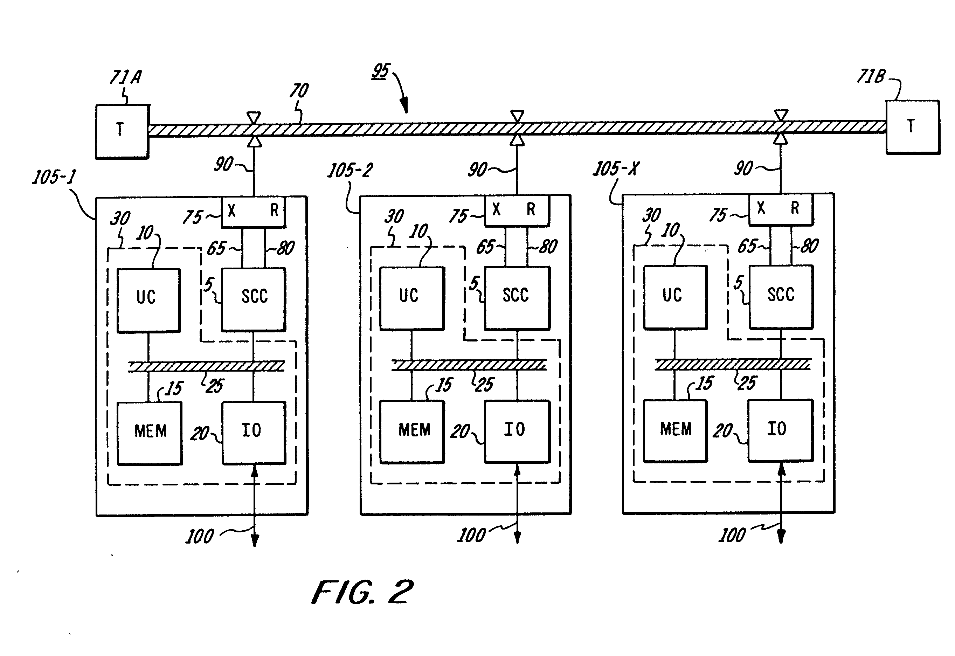

The shared communication controller system known as the SCC System 5 as shown in figure 1 is a VLSI multi-functional peripheral device operative to provide a general purpose interface with a microcomputer, such as an Intel 8085 (10). For purposes of this embodiment, it will be assumed that an 8085 (10) additionally has a main ROM and RAM memory 15, I/O module 20 and a standard 8085 bus 25 on a single printed circuit board 30 as shown in figure 2. The SCC chip 5 is a shared communication controller 5 designed for distributed systems using the Xerox Ethernet passive communication concept as described in US 4,063,220. In addition to a receiver 35 with an Input-Output channel receiver (IOCR) controller 37, and a transmitter 40 with an Input/Output channel transmitter (IOCT) controller 42, the SCC 5 includes a programmable interrupt controller (PIC) 50 and a small programmable controller (SPC) 50, all integrated on a single silicon die. The SCC 5 has been partitioned physically and logically onto several LSI macros as shown in figure 1 which are connected to an internal bus known as the standard silicon bus (SSB) 55. The bus 55 interfaces indirectly to the 8085 microprocessor 25 through the bus processor (BP) LSI macro 60. These LSI macros 35, 40, 42, 37, 50, 60 and 45 operate independently, but synchronously by means of a master clock 85 which controls the clock generators (not shown) for each of the silicon macros. Each of the LSI macros can be addressed independently by the external microprocessor 8085 The Ethernet communications on a shared coaxial line 70 having termination modules 71(a) and 71(b) uses phase encoding or Manchester coding for signaling. The shared line receiver 35 and the shared line transmitter 40 do the entire decoding and coding by digital techniques. All that is additionally optionally required is a transceiver 75 which intercepts the shared line transmitter 40 output line 80 and the shared logic receiver 35 input line 65 for inputting and outputting on line 90 to the shared line 70 (50 ohm coaxial cable in this embodiment). The transceiver 75 in the preferred embodiment is a Texas Instrument Model 26SI0 driver. The communication rate on the shared line 70 is 1.5 mbs for a 6MHz clock rate as given by the master clock 85. Each of the terminations 71A and B includes parallel combinations of resistors operative to terminate the coaxial line at its characteristic impedance for maximum noise immunity, as is well known in the art, where the grounded resistor for the grounding line of the coaxial cable is 249 ohms, and the bias (plus five volts) resistor for the signal line is 63 ohms.

In Figure 2 there is shown a series of SCC's 5, each in its own subcontroller 105-1 through 105-X, in a distributed system configuration 95. Not only does the SCC 5 handle the Ethernet communications to and fro the shared line 70, but is also adaptable to offload the 8085 microprocessor 10 by means of the small programmable controller (SPC) 50 and the programmable interrupt controller (PIC) 45. The SCC 5 makes it possible to partition a machine or the system hardware and software into major functional modules each with its own microprocessor 10. Thus the input-output data bus 100 from the input-output module 20 for each of the subcontrollers 105-1 through X collectively is able to control X number of predetermined functions within a given machine system (not shown). Accordingly, all of the distributed subcontrollers 105-1 to X comprising the system configuration 95 are able to direct all of the controllable functions of the given machine system. Thus, a given one or more of the subcontrollers 105-1 to X can be arbitrarily programmed to be a master controller(s) to any degree of hierarchized intelligence desired within the system constraints relative to the other distributed subcontrollers 105-1 to X within the system 95. Accordingly, one subcontroller 105 can be designated to be an absolute master controller with relatively all of the intelligence, whereas all of the remaining distributed subcontrollers may be complete slave subcontrollers with relatively no intelligence therein, with all the possible commutations and/or permutations there between depending on

the software therein, including a possible case of no master subcontroller, but rather an all co-equal peer group of interactive subcontrollers. Thus the SCC5 of the present invention may be programmed to emulate a model having purely centralized intelligence and/or decentralized intelligence depending on the conditions needed, thereby providing optimum control to machine-system functions at any given level.

The SCC 5 performs four basic functions: communicating via a shared line receiver 35 and a shared line transmitter 40 and associated input-output channel receiver and transmitter 37, 42; processing up to eight vectored priority interrupts for the microprocessor 10 through the PIC 45; performing multiple interval timer/counter housekeeping functions for the microprocessor 10 by means of the SPC 50; and finally handling input-output directly also through the SPC 50. These functions are implemented through the various LSI macros 37, 42, 50 and 45. The LSI macros are all connected to an internal bus called the standard silicon bus (SSB) 55, and all communication between the LSI macros takes place in this bus 55 utilizing a fixed protocol. The SSB 55 is also connected to a VLSI Macro bus processor 60 which converts the SSB 55 protocol to the microprocessor 10 protocol at the chip pins and is responsible for all communications between the SCC 5 chip and the external microprocessor 10. Thus, the different macros on the SCC chip 5 are IOCR 37, IOCT 42, SLR 35, SLT 40, PIC 45 and SPC 50 as shown in figure 1.

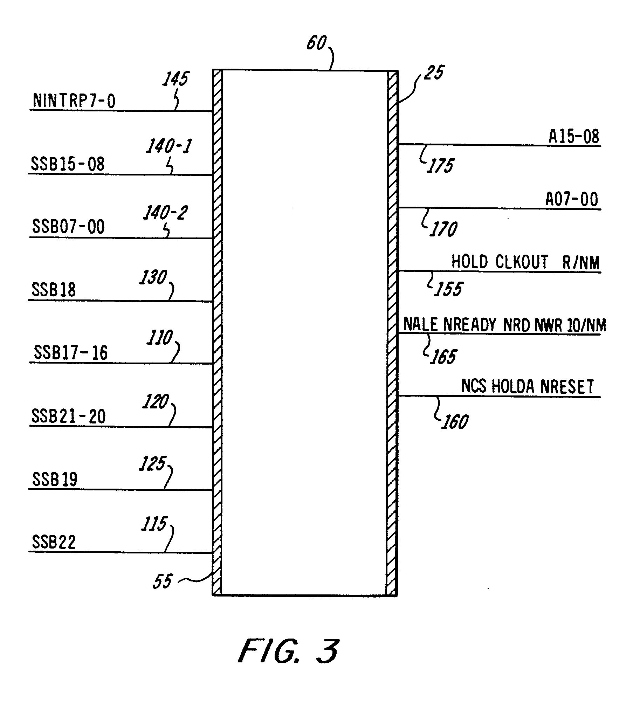

The bus processor (BP) 60 as shown in figure 1 and figure 3, is interfaced between the standard silicon bus 55 and the external 8085 bus 25. The BP 60 is capable of processing SSB 55 signals or up to four LSI macros each with DMA capabilities. The BP 60 determines, on the basis of a fixed predetermined priority, which LSI macro will be granted control of the SSB 55. The BP 60 will control the SSB 55 in response to any external microprocessor 10 bus 25 request directed at a LSI macro on the chip 5. Although the BP 60 is a general purpose microprocessor interface, it is optimized for the Intel 8085 (10) as used here. Through this interface or BP 60, the microprocessor 10 can read and write into integral registers which may reside in different LSI macros in the SCC 5 and it can receive interrupt vectors during protocols as will be described infra. The SCC 5 uses this interface BP 60 to request the processor/memory bus 25 to form DMA functions after the bus 25 is relinquished by the microprocessor 10. During the DMA operation, the main memory 15, which is accessed by the SCC 5, will observe the same signals and timing as that of the microprocessor 10.

The time domain in the SSB or bus system 55 is divided into bus states (or BS). Each bus state is in turn divided into bus cycles (or BC). Typically, each bus state contains four bus cycles (that is, DCAD (mm)/BCAD (IO), BCOP, BCRP (RQ), BCRP). Devices attaching to the SSB 55 are assigned fixed bus cycles during which they extract or insert information on the SSB 55. During BCAD and BCOP of a given bus state, the device controlling the bus (main processor 10 or one of the IO channel receiver or transmitter 37 or 42) defines the operation for that state and inserts address and write data if any. During DCRP (RQ) and DCRP of the same bus state, their responding device (memory 15, IOC 37 or 42 or one of the other devices) inserts read data if any and status if any and devices with pending interrupt and DMA requests to the main processor 10. The device in control of the SSB 55, be it the main processor 10 or one of the IOC 37 or 42, defines the sequence of bus cycles for that state via the two precharged bus/cycle definition lines known as SSB 16/17 on line group 110 as shown in figure 3. The bus master of the SSB 55 gives advanced read/write information and its identification (whether it be processor 10 or one of the IOC's 37 or 42) during DCAB and BCOP of the precharged status line 115 which is 55B 22 for read/write line. During BCRP of the same bus line 115, the responding device will insert a ready status. In a typical bus timing scheme, for bus state BS (I-1) the cycles will be BCAD (mm), BCOP and BCRP. For the bus state BS(I), the cycles would be BCAD (mm), BCOP (RQNX), BCRP (RQ) and BCRP. Finally, for the bus state BS (I+1), the timing cycles will be BCAD (IO), BCOP and BCRP. It will be appreciated that the bus state BS(I) does not necessarily have a one to one correspondence to the internal machine state of the macro in control of the SSB 55.

The SSB 55 has 22 lines denoted as SSB 1 through 22. These lines are divided into groups and defined as given below. For SSB 22 on line 115 known as RD/WR prime, during a DCAD (mm) or BCAD (IO), this precharged line defines what is a current SSB 55 transaction as a read (when one) or a write (when zero). During the BCOP cycle, this line indicates whether processor 10 (when one) or IOC 37 or 42 (when zero) is driving the bus 55. During the BCRP cycle, this line 115 provides the ready prime status. For SSB 21-SSB 20 on line group 120, the SSB 21 signal is known as the OSC or basic frequency clock. The SSB 20 signal is the PHA or basic clock divided by two. It will be appreciated that these lines are driven by the clock generation macro 85 as shown in figure 1. These two clock lines 120 are used in each macro to generate the Phase 1, Phase 2, Phase 3, Phase 4 and Phase 5 blocks. For the SSB 19 signal otherwise known as reset prime, on line 125 carrying low true system reset, causes all macros to be initialized when low true. In regards to the SSB 18 signal known as RQ prime on line 130, this precharged line on line group 130 carrying low true request, is driven low true by any macro with a pending interrupt condition or pending bus request condition. For the infra mentioned SSB 16-17 line group 110 where SSB 17 is a BC1 signal and SSB 16 is BCO signal, these lines are driven by the device in control of the SSB 55 via the main processor 10 or the IOC 37/42. The functions of a given bus cycle and the use of SSB 15-SSB 00 during that cycle are defined by the values of BC1 and BC0 as follows: For BC1 equals = 0 and BC 0 equals 1, a BC cycle name will be BCAD (mm) and the use of the SSB 15-SSB 00 will be as a memory address. For BC1 = 1 and BC0 = 0 the BC cycle name will be BCAD (IO) and the use of the SSB 15-00 will be as an IO address. For BC 1 and BC 0 = 1 the BC cycle name will be BCOP and the use of the SSB 15-00 will be as an operation. For BC1 and BC0 = 0, the BC cycle name will be BCRP and the use of the SSB 15-00 will be as a response. More specifically, during a BCAD (mm) cycle, SSB 15-00 will carry memory address information, during a BCAD IO cycle, SSB 15-00 will carry IO address information. During a BCOP cycle, SSB 15-00 will carry operation definition information (read, write, bus request acknowledge, request next, and write data). During BCRP (RQ) cycle, (which always follows a BCOP cycle specifying request next), SSB 15-00 will carry bus request, trap, and interrupt request supplied by direct IO devices and IO controllers. During BCRP which follows either a BCOP cycle or DCOP (RQNX), BCRP (RQ) cycle pair, SSB 15-00 will carry response information (read data, ready and so on).

- 8 -

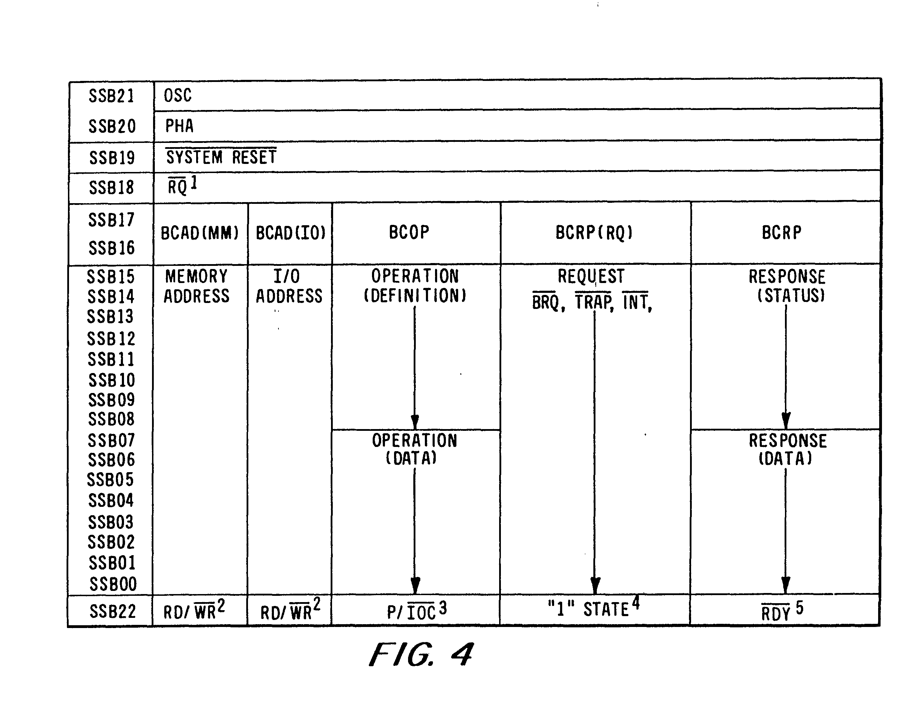

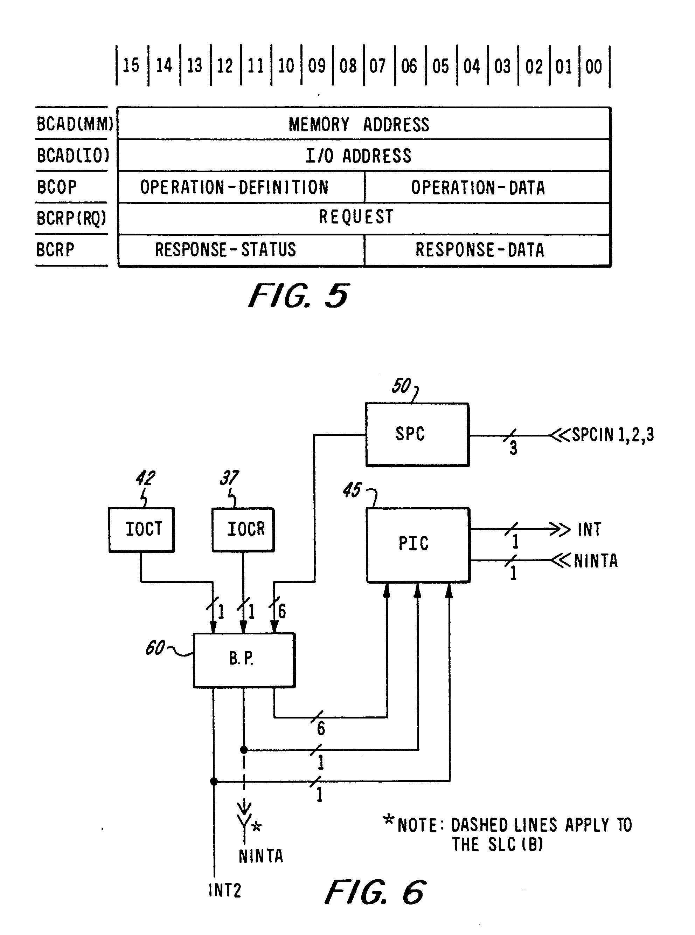

For SSB 15-00 on line set 140, as described above, these lines will carry address, data and control information depending upon the bus cycle in which they are used. A detailed description of these lines on set 140 is given in figures 4 and 5. The BP 60 has two different modes of operation. The first mode is called DMA mode. In this mode the BP 60 grants control of the SSB 55 to an internal LSI macro in the SCC 5 and then processes SSB 55 cycles "AD OP RP" for the external 8085 (10) bus 25. The second mode is called the chip select mode. In this mode the BP 60 processes external 8085 bus 25 cycles and converts these into SSB 55 cycles. "AD OP RP" for internal macro in the SCC 5. The next section describes these modes in some detail. A BP 60 also buffers eight internal interrupt request lines 145 for use by the PIC macro 45. Six of these interrupt lines are from the SPC 50 and two are from the IOC macros 37 and 42.

For the DMA mode, the BP 60 is active to OR together up to four internal bus request lines coming in on line 130 to the control unit 150 of the BP 60 from internal DMA type macros such as the IOC 37 and 42, and drives the line set including the hold 155 from the control unit 150 high true if HOLDA line set 160 going to the control unit 150 of the BP 60 is low. When the bus processor 60 detects a HOLDA on line 160 high true and there is an internal macro requesting DMA, the BP 60 acknowledges the highest priority requesting device with a SSB 55 cycle operation acknowledge or OPACK. At this point the acknowledged macro issues its DMA-SSB sequence incluidng AD OD RP as it sees its readouts RP, and the BP 60 takes the 8085 (10) signals including ALE, RD, WR, line set 165 AD07-00 and A15-00 on line sets 170 and 175 respectively, R/NW signal on set lines at 155, IO/W on line set 165, tristate and controls them to translate the DMA cycle to the external 8085 (10) bus 25 cycle.

The state of the external NReady is placed on the SSB bus 55 on line SSB 22 line group 115 only during their second and later RP SSB bus 55 cycles. The requesting internal macro in the SCC 5 will detect the signal if if is driven low true externally, or if it is internally generated from another macro on the SCC 5. If the DMA cycle is a read operation (NRD low true rate), the BP 60 will place a state of the signals AD7-O on line set 170 onto SSB 07-00 on line set 140 only when NReady on SSB 22 on line 115 is low true.

At the end of each DMA byte transaction (which is at SSB bus 55 cycle KP ready), the BP 60 decides on whether to continue to DMA mode or not. If there are not internal bus 55 request or if HOLDA on line set 160 is detected low, then the DMA mode is terminated and HOLD on line set 155 is driven low for a minimum of one half T clock. If there is a pending bus request in HOLDA on line set 160 it is detected high true, the BP 60 will continue the DMA mode and grant the SSB 55 control to the next macro in the SCC 5 within OPACK bus cycle using a round - robin priority method. If there are no requests pending other than the one just serviced, the BP 60 issues OPACK again to the same macro in the SCC5. If there are pending bus requests other than the one just received, the BP 60 directs an OPACK to a requesting macro in the SCC 5 in the following manner. First, if a low priority request is pending, then the BP 60 directs an OPACK to the highest priority request in the group of lower priority requests. Secondly, if a lower priority request is not pending, then the BP 60 directs an OPACK to the highest priority request in the group of higher priority requests.

In the chip select mode, it is entered when the BP 60 detects NRD or NWR on line set 165 low true and NCS on line set 160 is also low true and finally DMA mode is not active. The BP 60 first places the contents on an internal address register (which latched up the 8085 address A15-08 on line set 175, AD7-0 on line set 170 during NALE on line set 165 low true) onto the SSB bus 55 line set SSB 15-00 HO182 and then codes the state of IO/NM on line set 165 to generate the AD bus cycle definition. If an IO cycle is indicated (Because IO/NM on line set 165 is high or the mask option makes it appear high), the most significant 10 address bits placed on the SSB 55 at AD cycle time are set to zeros, and the lower 6 are passed along unaltered.

If a memory cycle is indicated (IO/NM on line set 140 is low), all address bits are passed along unaltered to the SSB 55 at AD cycle time. The BP 60, after generating an AD cycle on the SSB 55, then generates an OP cycle, where it placed the write data (if NWR is low true ) of AD 7-0 (170) onto SSB 7-0 (140-2). The BP 60 then generates RP bus cycles, continuing to do so until either the trailing edge of NRD or NWR, or until NREADY, line set 165 is detected from an internal macro of the SCC 5. During the RP cycle state, the BP 60 continues to drive the NREADY to the condition of the internal SSB 55 NREADY line SSB 22 on line 115, and if NRD on line set 165 is low, drives AD70 on line set 170 with read data. For read cycle, NREADY on line 115 is driven low true one T clock after read data. The bus processor 60 terminates the chip select mode and tri - states all outputs on the trailing edge of NRD or NWR on line set 165. The DMA mode cannot be entered until this mode is terminated. The BP 60 must be able to handle chip select sequences from an 8 megahertz external processor such as 8085 (10, when the minimum time from the trailing edge of NRD or NWR on line set 165 to the trailing edge of the next strobe can be 220 ns. min. Figure 6 illustrates the interrupt request interface between the LSI macros on the SCC 5. It will be noted that the bus processor 60 has buffers for up to eight low true interrupt request signal inputs and eight low true buffer outputs.

The (IOCR) 37 as shown in Figure 1 is a LSI macro of SCC 5 of an I/O channel through which the microprocessor 10 controls and communicates with a shared line receiver (SLR) 35. The IOCR 37 controls the transfer data between the SLR 35 and main memory 15 through a DMA sequence. The microprocessor 10 establishes a channel control block (CCB) in a RAM portion of the main memory 15 containing a command, the starting address to or from which the data is to be transferred, the byte count for the number of bytes of data to be transferred and the status byte to inform the microprocessor 10 of the results of the I/O operation. This notification of the completion of a single or a chain of I/O operation, defined by the channel control blocks (CCB) to the microprocessor 10 is by means of an interrupt.

Fundamentally, there are five elements involved in I/O operations: processor, random access memory, I/O channel, device controller and device. An I/O operation transfers a series of data bytes between a given RAM and a given external device. The direction of transfer is referenced to the given RAM, in or out.

The operations initiated by the processor 10 are guided by a control block on information stored in a RAM in the main memory 15 by a previous action of the processor 10. When instructed by the processor 10 to start an operation the IO channel such as the IOCT or I/O channel transmitter 42 will fetch the block from a RAM in main memory 15 and set up a data transfer path from the RAM in the main memory 15 to a device (not shown) through the shared line transmitter (SLT) 450, or vice versa as is the case here. Upon termination of the transfer operation, the I/O channel such as the IOCT 42 will notify the processor 10 by means of an interrupt. At this point before deciding on the next operation, the processor 10 will ascertain the status of the terminated operations.

The reason for including an I/O channel such as the IOCT 42 or the IOCR 37 in a system such as a subcontroller 105-1 is to relieve the processor 10 of the need to supervise each detail data transfer. Essentially, the processor 10 sets up the information needed by an I/O operation, then permits the operation to proceed independently. More specifically, the processor 10 or actually its control program which probably would be stored in the read-only memory in the main memory 15 must perform a series of tasks including initializing the I/O channel such as IOCT 42 or IOCR 37, set up a command block in RAM in the main memory 15 that defines the parameters of the I/O operation to be conducted. These parameters include specifying the I/O function that the device controller or subcontroller 105-10 RAM is to implement such as read or write , listing the initial address in RAM of the main memory 15 to 1 from which data are to be transferred, list the amount of RAM in the main memory 15 allocated for the operation, and specifying the manner in which these command blocks may be linked together to accomplish the chain of transfers longer than one block can manage. The next task is to order the I/O channel such as IOCT 42 or 37 to start an operation and give it the starting address as a command block in RAM in main memory 15. After the operation has proceeded, the task of receiving an interrupt from the I/O channel 37 or 42 reporting that the operation has terminated is performed. Finally, the task of acknowledging the interrupt and read status of the termination      is performed.

It will be appreciated that the main task of an I/O channel is to keep track of the transfer data between a device and/or machine function not shown in RAM in the main memory 15. This task may be broken into a number of sub-tasks. First, when started by the processor 10, a fetch is made to the designated command block from RAM in main memory 15 and thus implement the operation called for. Secondly, a transfer of data to and from the RAM in the main memory 15 beginning at the starting address is given in the command block. Thirdly, a running count is maintained of the number of bytes transferred. Fourthly, when the operation terminates as planned or otherwise an interrupt is issued. Fifthly, reasons for a termination are collected and made available to the processor 10. Finally, continuous information is maintained on its own operational state for use by the processor 10 in planning the next operation.

Because the I/O channel 37 or 42 operates on an 8 bit wide data path, the byte count established by the program used by the microprogrammer 10 and RAM in a main memory 15 for storage for a particular operation in this is limited to 256 bytes. Data transfers in excess of 256 bytes can be accomplished 256 bytes at a time by a series of control blocks chained together which permit the device to run continuously. At the end of the 256 bytes, specified by one control block, the I/O channel must fetch another block, partly to establish that the operation is to continue and partly to obtain a new starting address in a RAM in the main memory 15. However, this overhead operation is shortened if a new starting address in the next block is omitted and the I/O channel through 37/42 is designed to advance automatically to the next continous RAM address. This is called autochaining.

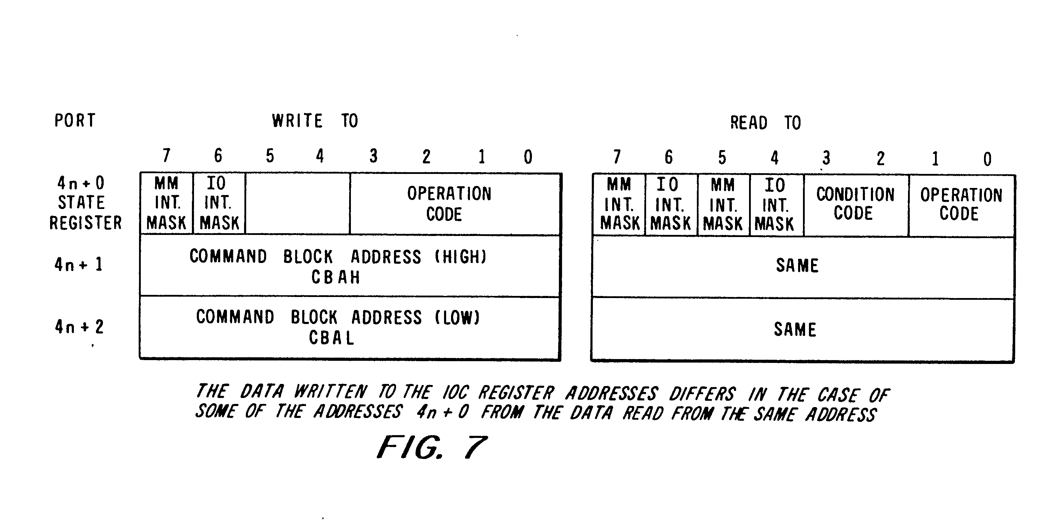

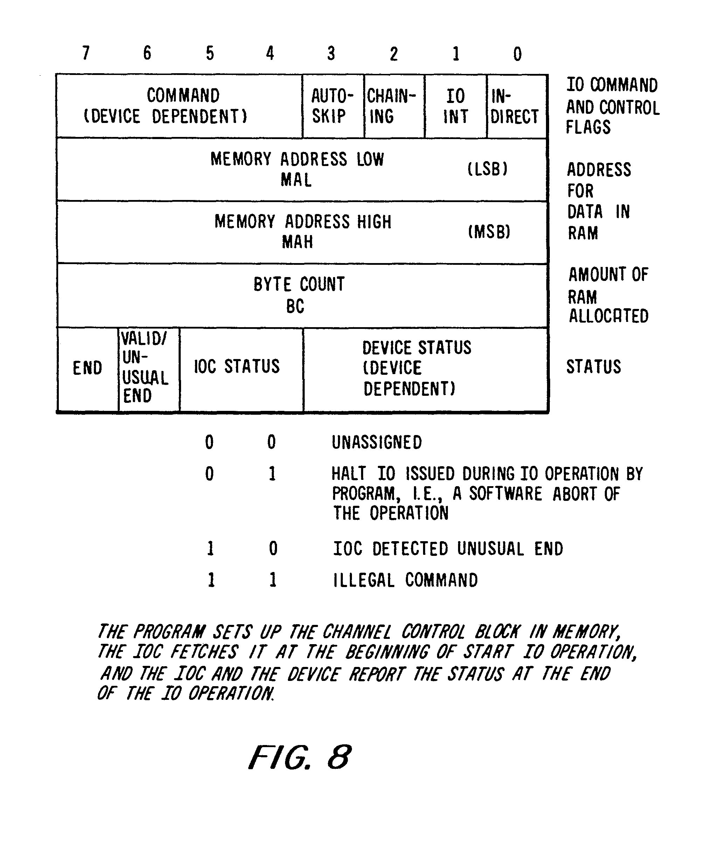

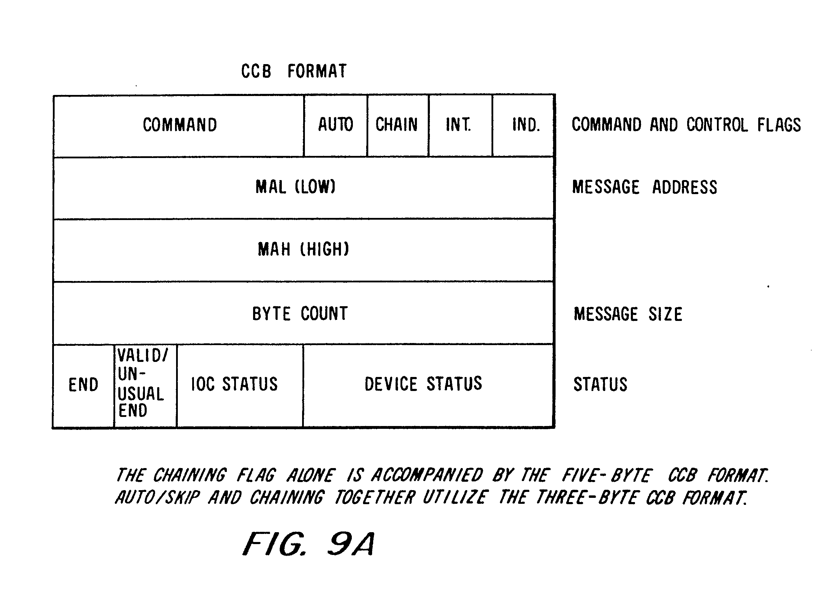

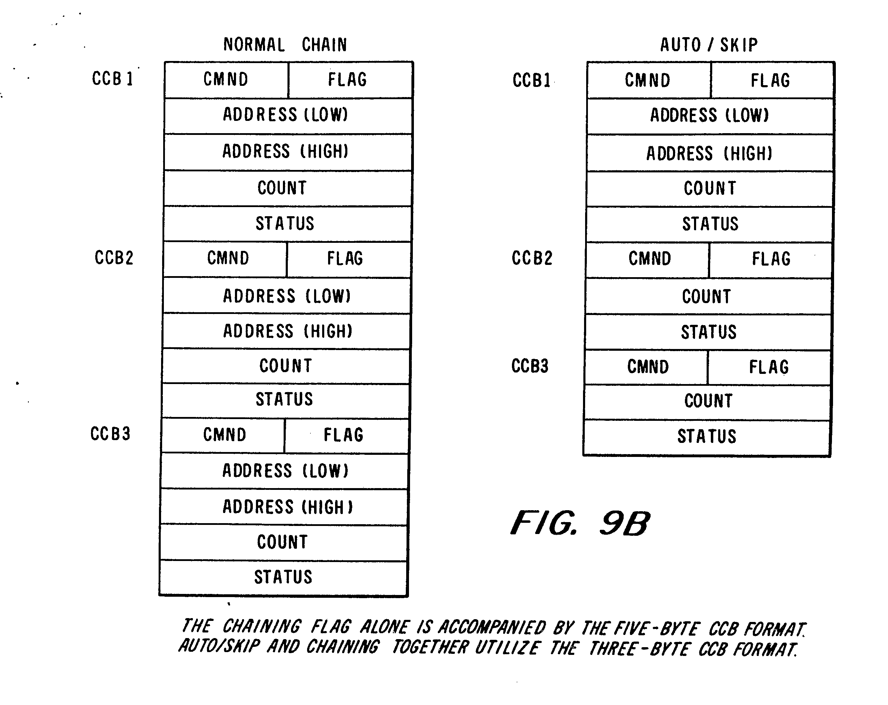

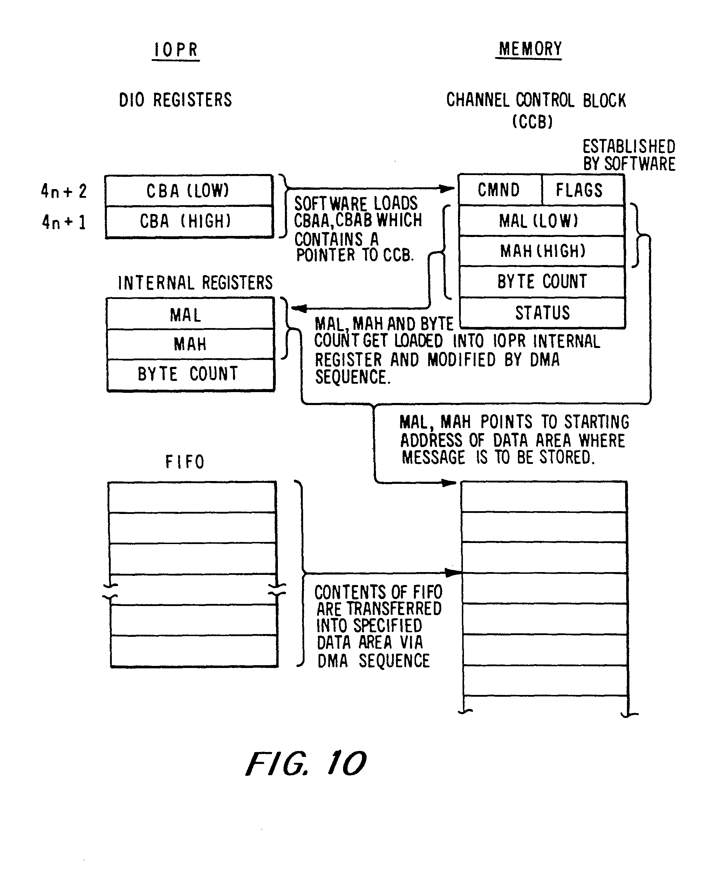

With this chaining there are two types of interrupts, one to signify the termination valid or unusual of an entire I/O operation and the other to signify the conclusion of each I/O operation within the control block or series of blocks. IOC-R 37 consists of a 16 byte FIFO buffer that will be shown later, a set of registers to hold the DMA control parameters which also will be shown later, a micro program sequence to control the IOC-R 37 operation as will be shown later and interface control logic as will be shown later. Figures 7,8, and 9 shown the registers of the IOCR 37. This can be written and read by software and the CCB formats, along with a different CCB chains which can be used for the software. Figure 10 illustrates the relationship of these registers of the IOCR 37 to the CCB in main memory 15.

The SLR or shared line receiver 35 of the SCC 5 as shown in figure 1 is an LSI macro designed to function as a receiver for a serial communication line like the shared line 70. The communication scheme uses byte concepts in the principles of the Xerox Ethernet. A microprocessor 10 controls the SLR 35 through its associated IOCR channel 37 using channel control blocks stored in main memory. The SLR 35 permits packets of digital data to be received from a number of transmitting stations. The communication medium 70 is passive and the data received by the SLR 35 must be Manchester phase encoded so that a message can be received independently of an external clock. Each SLR 35 only accepts messages explicitly addressed to it, except that in a promiscuous mode, it can intercept all messages. The SLR 35 also contains a CRC error detection logic as will be explained infra to detect errors in the received message packet. The shared line is a medium for communicating among a number of control elements each containing its own microprocessor 10. The shared line of the system configuration in this embodiment is a coaxial cable. The shared volume is accessed by a shared time receiver 35 (SLR) and in shared volume transmitter SLT 40 in each SCC 5 of each associated with a given subcontroller 105 in the system 95. The message is a bit serial digital data packet preceded by a start bit, destination address, and source address. Controlled access to the shared line rests with each receiving and transmitting station 35, 40. A subcontroller 105 may initiate a transmission only when the line 70 is clear. If two subcontrollers 105-1 and 105-2, as an example, have messages ready and have been waiting for a transmission to end, each initiates further random waiting period intended to minimize interference of one transmission with another. This interference is called a collision. If the collision is detected, the detecting station or shared line receiver 35 aborts its own transmission through SLT 40 and jams the line 70. The purpose of jamming is to ensure that all stations or subcontrollers 105 recognize the collision and abort their own transmissions, thus putting all stations in the back - off state.

The first requisite for obtaining an infinite back - off is a means for enabling each station 105-1 to X to create a period of random length. In the SLT 40 this means is a free-running counter, as will be shown infra which generates simulated random numbers. However, the random numbers are distributed about a mean so that the average length of the back-off periods is a known quantity. When the shared line 70 is engaged infrequently, as might be the case in a small system, a transmitter or SLT 40 has no difficulty in getting access to it.

As the number of stations 105 or the volume of messages increase, a transmitter 40 has to defer more often to existing messages. Also the frequency of collision between messages tends to rise. To make allowance for this increase, it is desirable to increase the average length of the back - off periods. This is accomplished by counting the number of collisions experienced by a receiver or SLT 35 and increasing the number of bits of random number transferred to a count-down counter (not shown). The timeout of this counter represents the back - off period. As each additional bit of the random numbers is loaded into the countdown counter, the average size of the number to be counted down doubles. As a back - off period doubles on average with each additional collision counted, the probability of another collision diminishes. However, after counting eight collisions the transmitter SLT 40 jams the line 70, aborts further attempts to transmit, and notifies its processor 10. At this point it is up to software to determine the next step.

For small systems 95 with only a few stations 105 on the shared volume 70, this back - off algorithm, with seven doublings in the original waiting period, may be more extensive than necessary. It is used in order to maintain upward or downward compatibility. In the shared volume system 95 the algorithm is implemented in hardware although the algorithm could as easily be implemented in software as in the Ethernet system indicated supra. In summary the SLR 35 is operative to monitor a shared line 70 and perform three essential functions including, first monitoring the shared line 70 for line conditions; monitoring the message packets for messages addressed to it, and thirdly, performing a CRC check on the bit serial data, converting the message to byte parallel data, and passing of data to the IOCR 37 to be transferred to the main memory 15 via a DMA sequence.

The IOCT 42 is a LSI macro relatively comparable functionally to the IOCR 37, but microprogrammed to uniquely handle an output function for the SLT 40. It functions similar to the IOCR 37 and consists of essentially the same elements therefor. The shared line transmitter or SLT 40 is a LSI macro designed to function as a transmitter for a shared communication line 70. It is used in conjunction with the SLR 35 on the SCC 5 to establish a control element and station 105-ITX on the shared line 70 for the system 95. As with the SLR 35, a microprocessor 10 controls the SLT 40 through I/O channels in the IOCT 42 using a channel control block stored in the main memory 15. The SLT 40 permits packets of digital data to be transmitted to a number of receiving stations 105 . The data is phase encoded by the SLT 40 so that it can be received by an SLR 45. Each SLT 40 station 105 is independent and must arbitrate contention as entreated by the SLR 35 for access to the shared line 70. This is done through an arbitration algorithm built into SLT 40. The SLT 40 also appends a CRC to each message so that a receiving SLR 35 can check the integrity of the data contained in the message packet. In summary the SLT 40 performs four essential functions; first, it arbitrates contentions on the shared line 70 and retransmits messages which collide on the shared line 70; secondly, it phase encodes data to go on the shared line 70; thirdly, it appends the CRC to the message packet, and finally it monitors a message transmission status and reports this status to the IOCT 42.

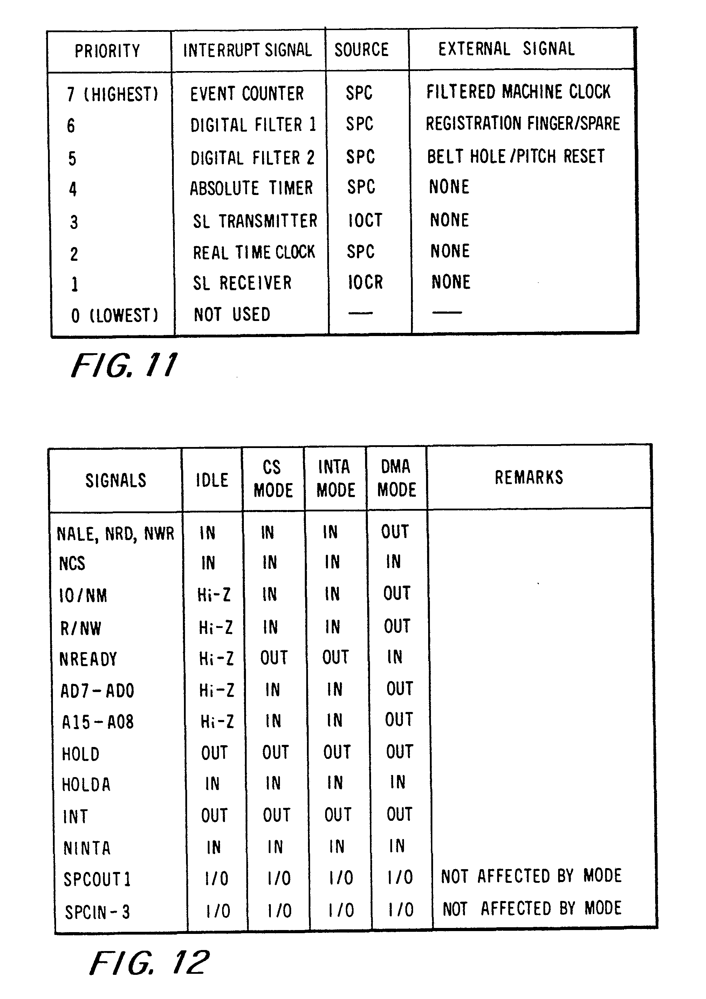

The PIC (programmable interrupt controller) 45 is an LSI macro in the SCC 5 designed for use in real time interrupt driven systems such as 95. It is operative to manage up to 8 vectored priority interrupt requests with built- in's which permit the selected masking of any interrupt level. The PIC 45 accepts interrupt requests, determines which of the incoming requests is of the highest priority, ascertains whether this new request has a higher priority than the one currently being serviced, and issues an interrupt to a microprocessor 10 based on this determination. After issuing an interrupt, the PIC 45 will provide an interrupt vector to the processor 10 as part of the three byte interrupt protocol. The PIC 45 consists, as will be shown infra, of interrupt pending registers, interrupt mask registers, interrupt active registers, priority logic, interrupt vector generator and control logic. It also contains registers, interrupt vector high and interrupt vector low which permit the interrupt vectors to be programmable. The PIC 45 can be mask programmed to handle different priority interrupt assignments. As indicated supra, the architecture of the PIC 45 is compatible and relatively similar to the Intel model 8259.                     For the SCC 5, the priority interrupt assignments were made in the following order as shown in figure 11.

If an interrupt input line N is activated through the SSB 55, an interrupt priority is set and the interrupt line 180 is raised to the control processor (10). In response to the acknowledgement on line 185 from the control processor 10, the PIC 45 returns with a predetermined number of bytes of data in the order of an XCD code first, a vector address low next, and a vector address high last. The vector address is determined by the contents of a predetermined vector address and a predetermined number of bits in the highest pending interrupt level. The content of the predetermined vector address is loaded by the control processor (10) and the level number is zero through with level 7 having the highest priority: according to the formula vector address equals VAR times $2^5$ plus $2^2$ times the quantity 7 minus N, where VAR is a binary value of the contents of a predetermined vector address and N is the interrupt level number. After level N has been acknowledged on line 185, the PIC 45 will clear the interrupt priority.

The small programmable controller (SPC) 50 is general purpose 8 bit processor with a 24 times 8 bit register array, I/O ports; AOU, frequency divider in a microprogrammable control memory capable of accommodating up to 100 micro instructions

It will be appreciated that the architecture of the SPC 50 is similar in concept and in detail to the microcomputer described in US 4,144,561.

The purpose of the SPC 50 is to handle high performance I/O tasks and offload the system processor or microcomputer 10. After the SPC 50 has been initialized and started, it will perform its program function until it needs to notify the processor 10, at which time it will interrupt processor 10. SPC 50 is initiated by a processor 10 through the use of high level commands in the form of input/output instructions. The SPC 50 can be either time - driven or event - driven to perform algorithms based on source data or input control strobes from either the I/O ports such as IOCT 42 and IOCR 37, or the processor 10. The SPC 50 can output resultant data or control strobes to either the processor 10 or the I/O ports 42,37.

The SPC 50 can be microprogrammed for many different applications, but in this particular SCC 5 it is programmed to provide the following described four functions. First, an absolute timer is operative to assist two major subfunctions, the prescaler and the absolute timer per se. The prescaler takes a constant value which will go into a given area for incrementing the value by one every 200 T time where T is equal to two divided by F (OSC). When the incremented value overflows, the prescaler will provide an output or reinitialize the constant value and repeat the incrementing process. The absolute timer takes a 16 bit constant value and every time the prescaler overflow a 16 bit variable value will be incremented by one. When the contents of the 16 bit variable value and the 16 bit constant value are equal, an interrupt is generated to the processor 10 on line 190 through the Intel bus 25. A 16 bit variable value can be read by the processor 10. Although it can also be written into, it is not recommended. An interrupt will be generated T microseconds after the two 16 bit values compare where T is equal to 200 times N times T times the value T minus C where N is equal to the 2's compliment of the constant value use of the prescaler, T is equal to 2 divided by F (OSC), K is equal to a 16 bit constant value used by the absolute timer function, and C is equal to the contents of the 16 bit variable value when the 16 bit constant value is controlled by the absolute timer.

In the real time clock function for the SPC 50, the clock function operates differently from the prescaler, but generates an interrupt whenever the overflow condition is detected. In a digital filter function, the SPC 5 provides the filtering function for three inputs into the SCC on line set 195 of       bus 25. The SPC 50 requires that the processor 10 software provided a constant which defines the resolution of the filtering function. The filtering inputs of the SPC 50 are from signals SPC IN 1, SPC IN 2 and SPC IN 3 of line set 195. The SPC 50 will sample these signals every 100 T, where T is equal to 2 divided by F (OSC). If any of the sampled signals stay in the same state for 100 N T, where N is the resolution, the output of the filter will change to that state and the following action will be taken by the SPC 5: for the SPC IN 1, the action will be to increment the number of events and if it overflows to set the interrupt level for PIC 45; for the SPC IN 2, the action will be to set the interrupt level 5; and for the SPC IN 3, the action will be to set the interrupt level 6.

In regards to the event counter function, the coming of events will be adaptable to accept a 16 bit constant from the processor 10. It will increment a 16 bit variable when the low to high transition is detected on the filtered SPC IN 1 signal on line set 195. When the variable equals the constant value, the interrupt level 7 will be generated. The SPC 50 also has one special signal, SPC-OUT on line set 190. The SPC-OUT is a 7.5 kHz clock with a 25% duty cycle.

During the normal operation SCC 5 has three different modes. The first mode   is the chip select. This is a quiescent mode of the SCC 5. The SCC 5 is in this mode after a system reset. In this mode, the SCC 5 is passive in regards to the processor 10/main memory 15 interface which is to say it cannot initiate a memory cycle on the process/memory interface.  It responds to interface after seeing an active state (NSC low) on line set 160 and a read/write strobe (NRD or NWR active) on line set 165.

In the interrupt acknowledge mode, the SCC 5 is passive on the processor 10/memory 15 interface.  SCC 5 responds to the interface when it sees the interrupt acknowledge on line set 185 driven active (NINTA low).  In the third mode for DMA known as a direct memory access, the SCC 5 is active on the processor 10/memory 15 interface.  It enters into this mode by detecting a HOLDA high on line set 160 after driving HOLD high on line set 155.  The SCC 5 has full control interface in order to access the main memory 10 or I/O (memory map) 20 devices attached to this interface.  Figure 12 shows the state of the SCC 5 in all three of these modes.

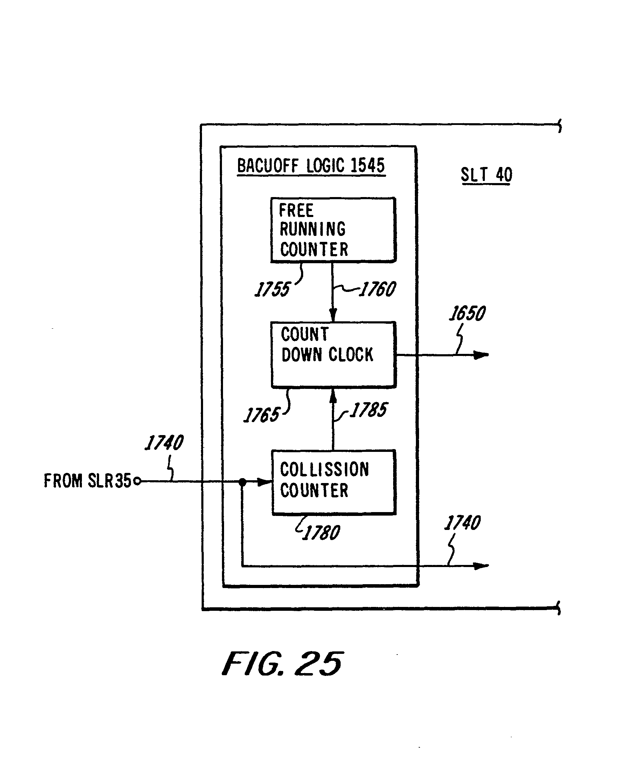

In regards to the backoff algorithm logic 1545 implemented in hardware, in the event of a collision, the back - off algorithm 1545 generates a psuedo-random number indicating a period of time that the SLT 40 is to wait before attempting to retransmit  its message.  In the SLT 40, the back - off algorithm 1545 comprises a collision counter 1780, a free-running counter 1755, and a countdown  counter 1765 as            shown        in Fig. 25.  The collision counter 1780, which inputs a signal on line 1740 from the SLR 35 indicating reception thereon, which is also used to temporarily stop the SLT 42, counts the number of collisions up to eight in this embodiment for outputting on line 1785.  The free running counter 1755 generates as described supra a psuedo - random number on line 1760.  After one collision, the free-running counter 1755 transfers one bit (which may be randomly either one or zero) on line 1760 to the count-down counter 1765.  The counter 1765 counts down, measuring the back - off periods for outputting at the end thereof a restart signal on line 1650 to the SLT 40. After two collisions, the free-running counter 1755 transfers two bits to the count down counter 1765, thus doubling the average size or word length of the number transferred in doubling the countdown period. The actual countdown of the two bits remains random and so on up to eight bits or the capacity of the count as described.

- 1 -

CLAIMS:

1. A shared-line communication system including a plurality of control elements (105) for associated machines and intercommunicating via the shared line (70), each control element having a data store (15) and a microcomputer (10), the system also including input/output channel means (37, 42) for reading control data from the store, or information data from the store or the line; a transmitter (40) for receiving the read-out control data and phase-encoding it for transmittal over the line to other control elements, and a receiver (35) for phase-decoding data received over the line from other control elements and transmitting the decoded control data to the input/output channel means.

2. The communication system of claim 1 wherein said transmitter includes back-off logic means operative to receive the packets of digital data from the shared line and, upon detecting interference over the shared line, for aborting phase encoding by said transmitter for a random period, and causing the transmitter to generate a signal to abort attempts by all the associated control elements to gain access to the line and for redoubling the abortion time if interference is still detected at the end of the first period.

3. The communication system of claim 2, wherein said back-off logic means further includes a free-running counter operative to be incremented by each of the detected interferences for generating a digital representation having a most-signficant bit equivalent to total interference, and actual contents equivalent to a psuedo-random number denoting the respective abortion time.

4. The communication system of claim 3, wherein said back-off logic means further includes a count-down counter operative to be set by said free-running counter after each interference for decrementing at a predetermined rate to measure the abortion period, which counter at zero causes abortion of phase-encoding by the transmitter to cease.

5.    The communication system of claim 4, wherein said back-off logic means further includes a collision counter for counting the actual interferences up to a predetermined number at which the count-down counter is disabled to obviate count-down during an abortion period of indefinite duration.

6.    The communication system of any preceding claim, wherein said transmitter includes a cyclic redundancy check generator operative to receive the channel blocks of control information and appendations thereto from said input-output channel means prior to phase encoding, for processing thereof according to a predetermined polynomial for appending the result at the end of the block of data information.

7.    The communication system of any preceding claim, wherein said data store includes a read-write memory.

8.    The communication system of any of claims 1 to 6, wherein said data store includes a random access memory.

9.    The communication system of any preceding claim, wherein said microcomputer includes a microprocessor.

10.    A communication system as claimed in any preceding claim wherein the receiver is adapted to abort phase-encoding upon detection of a collision; to cause an abort signal to be sent to all other associated control elements, and to redouble the duration of the abortion period and to reinitiate it, if interference on the shared line is still detected at the expiry of the first period.

FIG. 1

FIG. 2

FIG. 3

| | BCAD(MM) | BCAD(IO) | BCOP | BCRP(RQ) | BCRP |
|---|---|---|---|---|---|
| SSB21 | OSC | | | | |
| SSB20 | PHA | | | | |
| SSB19 | $\overline{\text{SYSTEM RESET}}$ | | | | |
| SSB18 | $\overline{RQ}$[1] | | | | |
| SSB17 / SSB16 | BCAD(MM) | BCAD(IO) | BCOP | BCRP(RQ) | BCRP |
| SSB15 – SSB08 | MEMORY ADDRESS | I/O ADDRESS | OPERATION (DEFINITION) | REQUEST $\overline{BRQ}$, $\overline{TRAP}$, $\overline{INT}$, | RESPONSE (STATUS) |
| SSB07 – SSB00 | | | OPERATION (DATA) | | RESPONSE (DATA) |
| SSB22 | RD/$\overline{WR}$[2] | RD/$\overline{WR}$[2] | P/$\overline{IOC}$[3] | "1" STATE[4] | $\overline{RDY}$[5] |

*FIG. 4*

| | 15 | 14 | 13 | 12 | 11 | 10 | 09 | 08 | 07 | 06 | 05 | 04 | 03 | 02 | 01 | 00 |
|---|---|---|---|---|---|---|---|---|---|---|---|---|---|---|---|---|
| BCAD(MM) | MEMORY ADDRESS | | | | | | | | | | | | | | | |
| BCAD(IO) | I/O ADDRESS | | | | | | | | | | | | | | | |
| BCOP | OPERATION-DEFINITION | | | | | | | | OPERATION-DATA | | | | | | | |
| BCRP(RQ) | REQUEST | | | | | | | | | | | | | | | |
| BCRP | RESPONSE-STATUS | | | | | | | | RESPONSE-DATA | | | | | | | |

## FIG. 5

*NOTE: DASHED LINES APPLY TO
THE SLC (B)

## FIG. 6

PORT

WRITE TO | | READ TO

| | 7 | 6 | 5 | 4 | 3 | 2 | 1 | 0 |
|---|---|---|---|---|---|---|---|---|
| 4n+0 STATE REGISTER | MM INT. MASK | IO INT. MASK | | | OPERATION CODE | | | |
| 4n+1 | COMMAND BLOCK ADDRESS (HIGH) CBAH | | | | | | | |
| 4n+2 | COMMAND BLOCK ADDRESS (LOW) CBAL | | | | | | | |

| | 7 | 6 | 5 | 4 | 3 | 2 | 1 | 0 |
|---|---|---|---|---|---|---|---|---|
| 4n+0 STATE REGISTER | MM INT. MASK | IO INT. MASK | MM INT. MASK | IO INT. MASK | CONDITION CODE | | OPERATION CODE | |
| 4n+1 | SAME | | | | | | | |
| 4n+2 | SAME | | | | | | | |

THE DATA WRITTEN TO THE IOC REGISTER ADDRESSES DIFFERS IN THE CASE OF SOME OF THE ADDRESSES 4n+0 FROM THE DATA READ FROM THE SAME ADDRESS

FIG. 7

| 7 | 6 | 5 | 4 | 3 | 2 | 1 | 0 | |
|---|---|---|---|---|---|---|---|---|

| | | | | | | | | |
|---|---|---|---|---|---|---|---|---|
| COMMAND<br>(DEVICE DEPENDENT) | | | | AUTO-<br>SKIP | CHAIN-<br>ING | IO<br>INT | IN-<br>DIRECT | IO COMMAND<br>AND CONTROL<br>FLAGS |
| MEMORY ADDRESS LOW<br>MAL | | | | | | (LSB) | | ADDRESS<br>FOR |
| MEMORY ADDRESS HIGH<br>MAH | | | | | | (MSB) | | DATA IN<br>RAM |
| BYTE COUNT<br>BC | | | | | | | | AMOUNT OF<br>RAM<br>ALLOCATED |
| END | VALID/<br>UN-<br>USUAL<br>END | IOC STATUS | | DEVICE STATUS<br>(DEVICE<br>DEPENDENT) | | | | STATUS |

| | | |
|---|---|---|
| 0 | 0 | UNASSIGNED |
| 0 | 1 | HALT IO ISSUED DURING IO OPERATION BY PROGRAM, I.E., A SOFTWARE ABORT OF THE OPERATION |
| 1 | 0 | IOC DETECTED UNUSUAL END |
| 1 | 1 | ILLEGAL COMMAND |

*THE PROGRAM SETS UP THE CHANNEL CONTROL BLOCK IN MEMORY, THE IOC FETCHES IT AT THE BEGINNING OF START IO OPERATION, AND THE IOC AND THE DEVICE REPORT THE STATUS AT THE END OF THE IO OPERATION.*

## FIG. 8

CCB FORMAT

| COMMAND | AUTO | CHAIN | INT. | IND. | COMMAND AND CONTROL FLAGS |
|---|---|---|---|---|---|
| MAL (LOW) | | | | | MESSAGE ADDRESS |
| MAH (HIGH) | | | | | |
| BYTE COUNT | | | | | MESSAGE SIZE |

| END | VALID/ UN- USUAL END | IOC STATUS | DEVICE STATUS | STATUS |
|---|---|---|---|---|

*THE CHAINING FLAG ALONE IS ACCOMPANIED BY THE FIVE-BYTE CCB FORMAT.*
*AUTO/SKIP AND CHAINING TOGETHER UTILIZE THE THREE-BYTE CCB FORMAT.*

## FIG. 9A

## NORMAL CHAIN

| | | |
|---|---|---|
| **CCB 1** | CMND | FLAG |
| | ADDRESS (LOW) | |
| | ADDRESS (HIGH) | |
| | COUNT | |
| | STATUS | |
| **CCB2** | CMND | FLAG |
| | ADDRESS (LOW) | |
| | ADDRESS (HIGH) | |
| | COUNT | |
| | STATUS | |
| **CCB3** | CMND | FLAG |
| | ADDRESS (LOW) | |
| | ADDRESS (HIGH) | |
| | COUNT | |
| | STATUS | |

## AUTO / SKIP

| | | |
|---|---|---|
| **CCB1** | CMND | FLAG |
| | ADDRESS (LOW) | |
| | ADDRESS (HIGH) | |
| | COUNT | |
| | STATUS | |
| **CCB2** | CMND | FLAG |
| | COUNT | |
| | STATUS | |
| **CCB3** | CMND | FLAG |
| | COUNT | |
| | STATUS | |

## FIG. 9B

THE CHAINING FLAG ALONE IS ACCOMPANIED BY THE FIVE-BYTE CCB FORMAT.
AUTO/SKIP AND CHAINING TOGETHER UTILIZE THE THREE-BYTE CCB FORMAT.

IOPR

MEMORY

DIO REGISTERS

CHANNEL CONTROL BLOCK
(CCB)

ESTABLISHED
BY SOFTWARE

| | |
|---|---|
| CMND | FLAGS |

4n+2 | CBA (LOW) |

4n+1 | CBA (HIGH) |

SOFTWARE LOADS
CBAA,CBAB WHICH
CONTAINS A
POINTER TO CCB.

| |
|---|
| MAL (LOW) |
| MAH (HIGH) |
| BYTE COUNT |
| STATUS |

INTERNAL REGISTERS

| |
|---|
| MAL |
| MAH |
| BYTE COUNT |

MAL, MAH AND BYTE
COUNT GET LOADED INTO IOPR INTERNAL
REGISTER AND MODIFIED BY DMA
SEQUENCE.

MAL, MAH POINTS TO STARTING
ADDRESS OF DATA AREA WHERE
MESSAGE IS TO BE STORED.

FIFO

CONTENTS OF FIFO
ARE TRANSFERRED
INTO SPECIFIED
DATA AREA VIA
DMA SEQUENCE

*FIG. 10*

| PRIORITY | INTERRUPT SIGNAL | SOURCE | EXTERNAL SIGNAL |
|---|---|---|---|
| 7 (HIGHEST) | EVENT COUNTER | SPC | FILTERED MACHINE CLOCK |
| 6 | DIGITAL FILTER 1 | SPC | REGISTRATION FINGER/SPARE |
| 5 | DIGITAL FILTER 2 | SPC | BELT HOLE /PITCH RESET |
| 4 | ABSOLUTE TIMER | SPC | NONE |
| 3 | SL TRANSMITTER | IOCT | NONE |
| 2 | REAL TIME CLOCK | SPC | NONE |
| 1 | SL RECEIVER | IOCR | NONE |
| 0 (LOWEST) | NOT USED | — | — |

*FIG. 11*

| SIGNALS | IDLE | CS MODE | INTA MODE | DMA MODE | REMARKS |
|---|---|---|---|---|---|
| NALE, NRD, NWR | IN | IN | IN | OUT | |
| NCS | IN | IN | IN | IN | |
| IO / NM | Hi-Z | IN | IN | OUT | |
| R / NW | Hi-Z | IN | IN | OUT | |
| NREADY | Hi-Z | OUT | OUT | IN | |
| AD7 – AD0 | Hi-Z | IN | IN | OUT | |
| A15 – A08 | Hi-Z | IN | IN | OUT | |
| HOLD | OUT | OUT | OUT | OUT | |
| HOLDA | IN | IN | IN | IN | |
| INT | OUT | OUT | OUT | OUT | |
| NINTA | IN | IN | IN | IN | |
| SPCOUT1 | I/O | I/O | I/O | I/O | NOT AFFECTED BY MODE |
| SPCIN - 3 | I/O | I/O | I/O | I/O | NOT AFFECTED BY MODE |

*FIG. 12*

STANDARD SILICON BUS

CLOCK WAVEFORMS

**FIG. 13**

12/29

0052456

RESET TIMING

PH1

PH2

$\overline{RESET}$

## FIG. 14

STANDARD SILICON BUS

BCRP(RQ)

SSB FIELD SPECIFICATION (BCRP (RQ))

| | |
|---|---|
| 15 | $\overline{BRQ7}$ |
| 14 | $\overline{BRQ6}$ |
| 13 | $\overline{BRQ5}$ |
| 12 | $\overline{BRQ4}$ |
| 11 | $\overline{BRQ3}$ |
| 10 | $\overline{BRQ2}$ |
| 09 | $\overline{BRQ1}$ |
| 08 | $\overline{TRAP}$ |
| 07 | $\overline{INT7}$ |
| 06 | $\overline{INT6}$ |
| 05 | $\overline{INT5}$ |
| 04 | $\overline{INT4}$ |
| 03 | $\overline{INT3}$ |
| 02 | $\overline{INT2}$ |
| 01 | $\overline{INT1}$ |
| 00 | $\overline{INT0}$ |

## FIG. 15

_STANDARD SILICON BUS_

SSB FIELD SPECIFICATION : BCOP CYCLE

OPERATION DEFINITION FIELD:

| 15 | 14 | 13 | 12 | 11 | 10 | 09 | 08 |
|---|---|---|---|---|---|---|---|
| XOP | $\overline{RQNX}$ | $\overline{RD}$ | $\overline{WR}$ | | | $\overline{WAIT}$ | $\overline{BRQA}$ |

## FIG. 14A

OPERATION DATA FIELD (AS A FUNCTION OF OPERATION DEFINITION FIELD):

| 15 XOP | 14 $\overline{RQNX}$ | 13 $\overline{RD}$ | 12 $\overline{WR}$ | 11 | 10 | 09 $\overline{WAIT}$ | 08 $\overline{BRQA}$ | 07 06 05 04 03 02 01 00 OPERATION DATA FIELD |
|---|---|---|---|---|---|---|---|---|
| 0 | $\overline{RQNX}$ | 0 | 1 | 1 | 1 | $\overline{WAIT}$ | 1 | (UNASSIGNED) |
| 0 | $\overline{RQNX}$ | 1 | 0 | 1 | 1 | $\overline{WAIT}$ | 1 | WRITE DATA |
| 0 | $\overline{RQNX}$ | 1 | 1 | 1 | 1 | $\overline{WAIT}$ | 1 | (UNASSIGNED) |
| 0 | 1 | 1 | 1 | 1 | 1 | 1 | 0 | BRQAID ←(UNASSIGNED) |
| 1 | 1 | 1 | 1 | 1 | 1 | 1 | 1 | (UNASSIGNED) |

## FIG. 14B

14 / 29

0052456

SSB FIELD SPECIFICATION (BCRP CYCLE)

RESPONSE STATUS FIELD:

| 15 | 14 | 13 | 12 | 11 | 10 | 09 | 08 |
|----|----|----|----|----|----|----|----|
| (UNASSIGNED) | | | | | | | |

## FIG. 16A

RESPONSE STATUS – DATA FIELD:

| | 15 | 14 | 13 | 12 | 11 | 10 | 09 | 08 | 07 | 06 | 05 | 04 | 03 | 02 | 01 | 00 |
|---|----|----|----|----|----|----|----|----|----|----|----|----|----|----|----|----|
| BCRP(MRD) | (UNASSIGNED) | | | | | | | | READ DATA (FROM ADDRESSED MEMORY) | | | | | | | |
| BCRP(MWR) | (UNASSIGNED) | | | | | | | | (UNASSIGNED) | | | | | | | |
| BCRP(IORD) | (UNASSIGNED) | | | | | | | | READ DATA (FROM ADDRESSED I/O) | | | | | | | |
| BCRP(IOWR) | (UNASSIGNED) | | | | | | | | (UNASSIGNED) | | | | | | | |

NOTES: BCRP(MRD) FOLLOWS EITHER BCAD(MM), BCOP(RD) OR BCAD (MM), BCOP(RD, RQNX), BCRP(RQ).

BCRP(MWR) FOLLOWS EITHER BCAD(MM), BCOP(WR) OR BCAD(MM), BCOP(WR, RQNX), BCRP (RQ).

BCRP(IORD) FOLLOWS EITHER BCAD (IO), BCOP (RD) OR BCAD(IO), BCOP (RD, RQNX), BCRP (RQ).

BCRP(IOWR) FOLLOWS EITHER BCAD (IO), BCOP (WR) OR BCAD (IO), BCOP (WR,RQNX), BCRP (RQ).

## FIG. 16B

STANDARD SILICON BUS

MEMORY READ OR I/O READ

PH 1

PH 2

PH 3

PH 4

A. MRD/IORD AND NOWAIT:

BS

SSB (17:16) — BCAD(MM) / BCOP / BCRP
BCAD(IO)

SSB (15:08) — AH / RD

SSB (07:00) — AL / DR

SSB 22 — RD / P/IOC / RDY

*FIG. 17A*

B. MRD/IORD AND WAIT:

BS

SSB (17:16)  BCAD(MM)  BCOP  BCRP  BCRP  BCRP
BCAD (IO)
SSB (15:08)  AH  RD
SSB (07:00)  AL  DR
SSB 22  RD  P/IOC  RDY

WAIT

C. MRD/IORD, RQNX AND NO WAIT:

BS

SSB (17:16)  BCAD(MM)  BCOP  BCRP(RQ)  BCRP
BCAD(IO)
SSB (15:08)  AH  RD  BRQ, TRAP
RQNX WAIT
SSB (07:00)  AL  INT  DR
SSB 22  RD  P/IOC  RDY

FORCED
WAIT

*FIG. 17B*

0052456

D. MRD/IORD, RQNX AND WAIT

| | | | | | |
|---|---|---|---|---|---|
| SSB (17:16) | BCAD(MM) BCAD(IO) | BCOP | BCRP (RQ) | BCRP | BCRP |
| SSB (15:08) | AH | RD RQNX.WAIT | BRQ.TRAP | | |
| SSB (07:00) | AL | | INT | | DR |
| SSB 22 | RD | P/IOC | | | RDY |

BS

FORCED WAIT

WAIT

*FIG. 17C*

STANDARD SILICON BUS

MEMORY WRITE OR I/O WRITE

PH1

PH2

PH3

PH4

A. MWR/IOWR AND NO WAIT:

|←——————— BS ———————→|

SSB(17:16)  BCAD(MM) / BCOP / BCRP
            BCAD(IO)

SSB(15:08)  AH / WR

SSB(07:00)  AL / DW

SSB22  WR / P/IOC / RDY

*FIG. 18A*

0052456

B. MWR/IOWR AND WAIT:

| | BS |
| SSB(17:16) | BCAD(MM) / BCOP / BCRP / BCRP / BCRP |
| | BCAD(IO) |
| SSB(15:08) | AH / WR |
| SSB(07:00) | AL / DW |
| SSB 22 | WR / P/IOC / RDY |

WAIT

C. MWR/IOWR, RQNX AND NO WAIT:

| | BS |
| SSB(17:16) | BCAD(MM) / BCOP / BCRQ(RQ) / BCRP |
| | BCAD(IO) |
| SSB(15:08) | AH / WR / BRQ,TRAP |
| | RQNX,WAIT |
| SSB(07:00) | AL / DW / INT |
| SSB 22 | WR / P/IOC / RDY |

FORCED
WAIT

*FIG. 18B*

20/29

0052456

D. MWR/IOWR, RQNX AND WAIT

FIG. 18C

BUS REQUEST ACKNOWLEDGEMENT

FIG. 19

STANDARD SILICON BUS

MASK-PROGRAMMED AND SOFT PROGRAMMED FEATURES IN MACROS

THE FOLLOWING TABLES LIST THOSE FEATURES THAT ARE MASK-PROGRAMMED
AND/OR SOFT-PROGRAMMED IN MACROS.

| FEATURE | NUMBER OF BITS | REQUIRED IN MACRO TYPE | HOW PROGRAMMED | | REMARKS |
|---|---|---|---|---|---|
| | | | MASK | SOFT | |
| MEMORY MACRO ADDRESS | M | MEMORY MACROS | V | | MEMORY MACRO ADDRESS IS THE MOST SIGNIFICANT M BITS OF THE 16-BIT MEMORY ADDRESS. THE REMAINING 16-M BITS SELECT ONE OUT OF $2^{16-M}$ POSSIBLE LOCATIONS (AND /OR FUNCTIONS IN THE CASE OF MEMORY-MAPPED I/O) WITHIN THE ADDRESSED MACRO. |
| I/O MACRO ADDRESS | N | DIO MACROS & IOC MACROS | V | | I/O MACRO ADDRESS IS THE MOST SIGNIFICANT N BITS OF THE 16-BIT I/O ADDRESS. THE REMAINING 16-N BITS SELECT ONE OUT OF $2^{16-N}$ POSSIBLE LOCATIONS AND/OR FUNCTIONS WITH-IN THE ADDRESSED MACRO. |

FIG. 20A

STANDARD SILICON BUS

| FEATURE | NUMBER OF BITS | REQUIRED IN MACRO TYPE | HOW PROGRAMMED | | REMARKS |
|---------|----------------|------------------------|------|------|---------|
| | | | MASK | SOFT | |
| INTERRUPT REQUEST BIT ASSIGNMENT | 8 | DIO MACROS AND IOC MACROS | V | | SELECTS ONE OUT OF 8 POSSIBLE POSITIONS FOR SENDING INTERRUPT REQUESTS DURING BCRP(RQ) CYCLE. |
| BUS REQUEST BIT ASSIGNMENT | 7 | IOC MACROS | V | | SELECTS ONE OUT OF 7 POSSIBLE BIT POSITIONS FOR SENDING BUS RE- QUESTS DURING BCRP(RQ) CYCLE. |
| BUS REQUEST ACKNOWLEDGE- MENT ID (SAME AS BUS REQUEST BIT ASSIGNMENT) | 7 | IOC MACROS | V | | THE 7-BIT CODE (PROVIDED BY THE PROCESSOR) SELECTS ONE OUT OF UP TO 8 IOC DEVICES FOR BUS REQUEST ACKNOWLEDGEMENT. |

FIG. 20B

STANDARD SILICON BUS

I/O ADDRESS ASSIGNMENT

I/O ADDRESS

| Address | Block | Register |
|---|---|---|
| 0 | IOC 1 | STATE REGISTER |
| 1 | | CBA HIGH |
| 2 | | CBA LOW |
| 3 | | (UNASSIGNED) |
| 4 | IOC 2 | STATE REGISTER |
| 5 | | CBA HIGH |
| 6 | | CBA LOW |
| 7 | | (UNASSIGNED) |
| 8 ... 23 | | |
| 24 | IOC 7 | STATE REGISTER |
| 25 | | CBA HIGH |
| 26 | | CBA LOW |
| 27 | | (UNASSIGNED) |
| 28 ... 127 | (UNASSIGNED) | |
| 128 | DIRECT I/O 0 | |
| 129 | DIRECT I/O 1 | |
| 130 ... 253 | | |
| 254 | DIRECT I/O 126 | |
| 255 | DIRECT I/O 127 | |
| 256 | (UNASSIGNED) | |

*FIG. 21*

STANDARD SILICON BUS

EACH I/O CONTROLLER HAS 4 I/O ADDRESSES ASSIGNED TO IT AND 3 BASIC REGISTERS. TWO OF THESE BASIC REGISTERS ARE USED TO HOLD THE CBA. THE THIRD BASIC REGISTER, CALLED THE STATE REGISTER, CONTAINS THE WRITE-TO-STATE-REGISTER FORMAT AND READ-FROM-STATE-REGISTER FORMAT AS SHOWN BELOW:

WRITE-TO-STATE-REGISTER FORMAT:

| $IM_2$ | $IM_1$ | * | | OPERATION CODE | | | |
|---|---|---|---|---|---|---|---|
| 7 | 6 | 5 | 4 | 3 | 2 | 1 | 0 |

| | | | | | | | |
|---|---|---|---|---|---|---|---|
| | | 1 | 1 | 0 | 0 | SIO |
| | | 1 | 1 | 0 | 1 | HIO |
| | | 1 | 1 | 1 | 0 | AIO (CLEAR INTERRUPT REQUEST 1) |
| | | 1 | 1 | 1 | 1 | RIO |
| $IM_2$ | $IM_1$ | 1 | 0 | 0 | 0 | LOAD INTERRUPT MASK |
| | | 1 | 0 | 0 | 1 | CLEAR INTERRUPT REQUEST 2 |
| OTHERS | | | | | | (TO BE ASSIGNED DIFFERENTLY FOR DIFFEREN IOC'S) |

*FIG. 22A*

CCB FORMATS

| COMMAND/FLAGS |
|---|
| ADDRESS (LOW) |
| ADDRESS (HIGH) |
| BYTE COUNT |
| STATUS |

| COMMAND/FLAGS |
|---|
| ADDRESS (LOW) |
| ADDRESS (HIGH) |

| COMMAND/FLAGS |
|---|
| BYTE COUNT |
| STATUS |

*FIG. 24*

READ-FROM-STATE-REGISTER

| IM$_2$ | IM$_1$ | INT$_2$ | INT$_1$ | CONDITION CODE | | OPERATION CODE | |
|---|---|---|---|---|---|---|---|
| 7 | 6 | 5 | 4 | 3 | 2 | 1 | 0 |

|   |   |   |
|---|---|---|
| 0 | 0 | SIO |
| 0 | 1 | HIO |
| 1 | 0 | AIO |
| 1 | 1 | RIO |

|   |   |   |
|---|---|---|
| 0 | 0 | A (AVAILABLE) |
| 0 | 1 | I (INT.REQ. I PENDING) |
| 1 | 0 | W (WORKING) |
| 1 | 1 | N (NOT OPERATIONAL) |

|   |   |   |
|---|---|---|
| 0 | 0 | NO INTERRUPT REQUESTS |
| 0 | 1 | INTERRUPT REQUEST 1 |
| 1 | 0 | INTERRUPT REQUEST 2 |
| 1 | 1 | BOTH INTERRUPT REQUEST 1 & INTERRUPT REQUEST 2 |

|   |   |   |
|---|---|---|
| 0 | 0 | BOTH INTERRUPT REQUEST ARMED |
| 0 | 1 | INTERRUPT REQUEST 2 ARMED; INTERRUPT REQUEST 1 DISARMED |
| 1 | 0 | INTERRUPT REQUEST 2 DISARMED; INTERRUPT REQUEST 1 ARMED |
| 1 | 1 | BOTH INTERRUPT REQUESTS DISARMED |

## FIG. 22B

I/O CONTROLLER STATE TRANSITION TABLE

| | SIO | AIO | HIO | RIO | TIO | END OF I/O INTR. FLAG SET IN CCB | END OF I/O INTR. FLAG NOT SET | POWER BECOMES NORMAL. SELF DIAG. OK | POWER NOT NORMAL. SELF DIAG. NOT OK. |
|---|---|---|---|---|---|---|---|---|---|
| YY, N | YY, N | YY, N | YY, N | YY, N | YY, N | YY, N | YY, N | RIO, A | YY, N |
| RIO, A | SIO, W | <u>6</u> | - | - | - | X | X | X | YY, N |
| SIO, W | - | - | HIO, A | RIO, A | - | SIO, I | RIO, A | X | YY, N |
| SIO, 1 | - | AIO, A (INTER. RESET) | - | RIO, A | - | X | X | X | YY, N |
| AIO A | SIO W | - | - | RIO A | - | X | X | X | YY N |
| HIO, A | SIO, W | - | - | RIO, A | - | X | X | X | YY, N |

*FIG. 23*

FIG. 25

0052456

## DOCUMENTS CONSIDERED TO BE RELEVANT

| Category | Citation of document with indication, where appropriate, of relevant passages | Relevant to claim |
|---|---|---|
| Y | US - A - 4 063 220 (XEROX)<br><br>* column 3, lines 20-60; column 4, lines 26-59; column 5, line 66 to column 6, line 14; column 6, lines 48-54; column 10, line 35 to column 11, line 13; column 11, line 58 to column 12, line 51; figures 1 and 2 *<br>--- | 1-5,10 |
| Y | US - A - 4 210 780 (MITRE CORP.)<br><br>* column 4, lines 5-11; column 5, lines 33-38; figure 2 *<br>--- | 1,2, 7-10 |
| Y | IEEE PROCEEDINGS DISTRIBUTED COMPUTING, COMPCON 80, September 23-25, 1980, NEW YORK (US) S.A. KAHN et al.: "Functional and Logical Description of a New Fiber-Optic Contention Bus Network", pages 268-272<br><br>* page 269, right-hand column, lines 6-24; page 271, left-hand column, lines 8-15 *<br>--- | 1,2,6, 10 |
| Y | IEEE COMPUTER SOCIETY INTERNATIONAL CONFERENCE, COMPCON 80, February 25-28, 1980, NEW YORK (US) I. CHLAMTAC et al.: "Performance Issues in Backend Storage Networks", pages 238-246<br><br>* page 238, left-hand column, lines 18-23 *<br>--- | 2 |

./..

**CLASSIFICATION OF THE APPLICATION (Int. Cl. 3)**

G 06 F   3/04
H 04 L  11/16

**TECHNICAL FIELDS SEARCHED (Int.Cl.3)**

G 06 F   3/04
H 04 L  11/16

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| The Hague | 15.02.1982 | DAVIES |

EPO Form 1503.1  06.78

**0052456**

| | European Patent Office | **EUROPEAN SEARCH REPORT** | Application number |
| | | | EP 81 30 5164 |

- 2 -

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | IBM TECHNICAL DISCLOSURE BULLETIN, vol. 23, no. 2, July 1980, NEW YORK (US) D.F. BANTZ et al.: "Decentralized Bus Architecture with Collision Retry", pages 858-861 <br><br> * page 860, lines 7-43 * | <br><br><br><br><br><br>1-4 | |
| | ---------- | | |
| | | | TECHNICAL FIELDS SEARCHED (Int. Cl.³) |

EPO Form 1503.2   06.78